# EUROPÄISCHE PATENTSCHRIFT

(11) **EP 3 264 937 B1**
(45) Veröffentlichungstag und Bekanntmachung des Hinweises auf die Patenterteilung: **30.01.2019**
(21) Anmeldenummer: 16708640.4
(22) Anmeldetag: 04.03.2016
(51) Int. Cl.: A47B 31/06

(54) **GETRÄNKEZUBEREITUNGSVORRICHTUNG FÜR EIN FAHRZEUG SOWIE VERFAHREN ZU DEREN BETRIEB**
BEVERAGE-PREPARATION APPARATUS FOR A VEHICLE AND METHOD FOR OPERATING THE SAME
DISPOSITIF DE PRÉPARATION DE BOISSONS POUR UN VÉHICULE AINSI QUE PROCÉDÉ DE FONCTIONNEMENT DUDIT DISPOSITIF

(30) Priorität: 05.03.2015 DE 102015103239
(43) Veröffentlichungstag der Anmeldung: 10.01.2018
(73) Patentinhaber: Genesis Patent AG, 6631 Hünenberg (CH)
(72) Erfinder: STRAUSS, Andreas, 35745 Herborn (DE)
(74) Vertreter: Wachenhausen & Kollegen Patentanwälte GbR
(86) Internationale Anmeldenummer: PCT/EP2016/054673
(87) Internationale Veröffentlichungsnummer: WO 2016/139350

(56) Entgegenhaltungen:
- DE-A1-102006 032 623
- DE-A1-102010 014 392

## Beschreibung

Die Erfindung betrifft eine Getränkezubereitungsvorrichtung für ein Fahrzeug sowie ein Verfahren zum Betrieb der Getränkezubereitungsvorrichtung. Die Erfindung wird zwar im Zusammenhang mit Flugzeugen beschrieben, kann aber vorteilhaft auch in anderen Fahrzeugen verwendet werden.

Es ist bekannt, Fahrzeuge mit Getränkezubereitungsvorrichtungen zur Zubereitung uns Ausgabe von unterschiedlichen heißen und/oder kalten Getränken auszustatten. An in Fahrzeugen betriebene Getränkezubereitungsvorrichtungen werden häufig besondere Anforderungen hinsichtlich deren Zuverlässigkeit gestellt, da für eine Reserve-Getränkezubereitungsvorrichtung häufig kein Raum zur Verfügung steht.

Die Druckschrift DE-A-10 2010 014392 offenbart eine mobile Getränkezubereitungsvorrichtung zur Zubereitung von Getränken mit einem Getränkeextrakt und zur Ausgabe der zubereiteten Getränke in einem Fahrzeug, aufweisend ein fahrbares Gehäuse, ausgestaltet zur auswechselbaren Aufnahme der Extraktbehälter, wobei die Extraktbehälter zur Aufnahme des Getränkeextrakts ausgestaltet sind.

Es ist eine Aufgabe der Erfindung, eine mobile Getränkezubereitungsvorrichtung zur Verfügung zu stellen, welche die an sie hinsichtlich ihrer Zuverlässigkeit gestellten Anforderungen besser erfüllen kann.

Gemäß einem ersten Aspekt der Erfindung wird diese Aufgabe durch eine mobile Getränkezubereitungsvorrichtung zur Zubereitung von, insbesondere heißen und/oder kalten, Getränken mit wenigstens einem Getränkeextrakt (Getränkezubereitung) und zur Ausgabe der zubereiteten Getränke (Getränkeausgabe) in einem Fahrzeug gelöst, wie sie nachfolgend beschrieben wird. Gemäß einem zweiten Aspekt der Erfindung wird diese Aufgabe durch ein Verfahren zum Betrieb der Getränkezubereitungsvorrichtung gelöst.

Die Getränkezubereitungsvorrichtung gemäß dem ersten Aspekt weist ein fahrbares Gehäuse auf, welches zur auswechselbaren Aufnahme wenigstens eines Extraktbehälters ausgestaltet ist. Die Getränkezubereitungsvorrichtung kann zeitgleich mehrere der Extraktbehälter auswechselbar aufnehmen, welche dann einzeln entnehmbar sind. Der wenigstens eine Extraktbehälter ist zur Aufnahme des Getränkeextrakts ausgestaltet und weist wenigstens eine Behälterinformation auf. Die Behälterinformation ist repräsentativ für eine Kennung des Extraktbehälters, für das Volumen des Extraktbehälters (Behältervolumen) oder für die Art des Getränkeextrakts. Der Extraktbehälter kann zeitgleich mehrere dieser Behälterinformationen aufweisen.

Weiter weist die Getränkezubereitungsvorrichtung eine Kommunikationseinrichtung auf, welche zur Übermittlung einer oder mehrerer der Behälterinformationen, insbesondere an eine übergeordnete Kommunikationseinrichtung insbesondere des Fahrzeugs, ausgestaltet ist.

Insbesondere wenn wenigstens einer der Getränkeextrakte zur Neige geht, und/oder wenn ein unerwünscht geringer Restbestand einer der Getränkeextrakte unerkannt bleibt und/oder wenn ein unerwünscht geringer Restinhalt des zugehörigen Extraktbehälters unerkannt bleiben, dann kann die Versorgung mit dem zugehörigen Getränk während des Fahrzeugbetriebs beeinträchtigt sein. Indem die Getränkezubereitungsvorrichtung gemäß dem ersten Aspekt aber eine Kommunikationseinrichtung aufweist, können ein unerwünscht geringer Restbestand wenigstens eines der Getränkeextrakte und/oder ein unerwünscht geringer Restinhalt des zugehörigen Extraktbehälters an eine übergeordnete Kommunikationseinrichtung übermittelt und ein Austausch des zugehörigen Extraktbehälters oder dessen erneute Befüllung mit Getränkeextrakt insbesondere am Zielort des Fahrzeugs vorgesehen werden. Dadurch kann die zu Grunde liegende Aufgabe gelöst werden.

Das Verfahren gemäß dem zweiten Aspekt der Erfindung dient dem Betrieb einer Getränkezubereitungsvorrichtung zur Zubereitung von, insbesondere heißen und/oder kalten, Getränken mit wenigstens einem Getränkeextrakt (Getränkezubereitung) und zur Ausgabe der zubereiteten Getränke (Getränkeausgabe) in einem Fahrzeug. Vorzugsweise entspricht die Getränkezubereitungsvorrichtung dem ersten Aspekt der Erfindung.

Das Verfahren weist den Schritt auf:
So Übermitteln wenigstens einer Behälterinformation, wobei die Behälterinformation repräsentativ für die Kennung eines Extraktbehälters zur Aufnahme des Getränkeextrakts, das Volumen des Extraktbehälters (Behältervolumen) oder die Art des Getränkeextrakts ist, wobei der Extraktbehälter von einem fahrbaren Gehäuse der Getränkezubereitungs-vorrichtung auswechselbar aufgenommen ist, durch eine Kommunikations-einrichtung der Getränkezubereitungsvorrichtung, insbesondere an eine übergeordnete Kommunikationseinrichtung.

Insbesondere wenn wenigstens einer der Getränkeextrakte zur Neige geht, und/oder wenn ein unerwünscht geringer Restbestand einer der Getränkeextrakte unerkannt bleibt und/oder wenn ein unerwünscht geringer Restinhalt des zugehörigen Extraktbehälters unerkannt bleiben, dann kann die Versorgung mit dem zugehörigen Getränk während des Fahrzeugbetriebs beeinträchtigt sein. Indem das Verfahren gemäß dem zweiten Aspekt den Schritt So aufweist, können ein unerwünscht geringer Restbestand wenigstens eines der Getränkeextrakte und/oder ein unerwünscht geringer Restinhalt des zugehörigen Extraktbehälters an eine übergeordnete Kommunikationseinrichtung übermittelt werden. Insbesondere am Zielort des Fahrzeugs kann ein Austausch des zugehörigen Extraktbehälters oder dessen erneute Befüllung mit Getränkeextrakt vorgesehen werden. Dadurch kann die zu Grunde liegende Aufgabe gelöst werden.

Unter einem Extraktbehälter ist im Sinne der Erfindung ein, insbesondere unabhängiger, Behälter zu verstehen, welcher einen, insbesondere flüssigen oder pulverförmigen, Getränkeextrakt aufnehmen kann und aus welchem der Getränkeextrakt zur Getränkezubereitung entnommen werden kann.

Unter einer Behälterinformation ist im Sinne der Erfindung eine einem Extraktbehälter zugeordnete Information zu verstehen, wobei die Information repräsentativ für eine Kennung des Extraktbehälters, für das Volumen des Extraktbehälters (Behältervolumen) oder für die Art des vom Extraktbehälter aufgenommenen Getränkeextrakts ist. Ebenfalls als Behälterinformation im Sinne der Erfindung gelten:
- eine Mengenangabe, welche auf die im Extraktbehälter anfänglich enthaltene Menge M₀ des Getränkeextrakts hinweist, wobei technisch bedingt sein kann, dass die anfänglich enthaltene Menge M₀ dem Extraktbehälter nicht vollständig entnehmbar ist,
- ein durch eine Steuereinrichtung der Getränkezubereitungsvorrichtung bestimmter Restinhalt M, welcher auf die Menge des gegenwärtig im Extraktbehälter verbliebenen Getränkeextrakts hinweist,
- ein Datum, welches auf eine Haltbarkeit des Getränkeextrakts hinweist,
- ein Datum, welches auf den Zeitpunkt der Zuführung des Extraktbehälters zu der Getränkezubereitungsvorrichtung hinweist.

Unter einer Kommunikationseinrichtung ist im Sinne der Erfindung eine Einrichtung zu verstehen, welche eine oder mehrere der Behälterinformationen empfangen, abfragen oder lesen kann und eine oder mehrere der Behälterinformationen an einen Empfänger übertragen kann, insbesondere an eine übergeordnete Kommunikationseinrichtung, insbesondere auf Veranlassung der übergeordneten Kommunikationseinrichtung oder insbesondere auf Veranlassung einer elektronischen Steuereinrichtung der Getränkezubereitungsvorrichtung. Die Kommunikationseinrichtung kann mit einer Steuereinrichtung der Getränkezubereitungsvorrichtung signalverbunden sein.

Nachfolgend sind bevorzugte Weiterbildungen beschrieben, welche ohne gegenteiligen Hinweis vorteilhaft miteinander kombinierbar sind.

Gemäß einer Weiterbildung weist das Gehäuse wenigstens ein vorderes Gehäuseelement auf, wobei das vordere Gehäuseelement einen Innenraum des Gehäuses gegenüber der Umgebung begrenzen kann.

Gemäß einer Weiterbildung ist die Kommunikationseinrichtung ausgestaltet, auf eine Aufforderung der übergeordneten Kommunikationseinrichtung wenigstens eine der Behälterinformationen zu übermitteln. Vorzugsweise übermittelt die Kommunikationseinrichtung ausschließlich nach Aufforderung durch die übergeordnete Kommunikationseinrichtung Diese übergeordnete Kommunikationseinrichtung kann eine fahrzeugeigene Kommunikationseinrichtung sein. Diese Weiterbildung kann den Vorteil bieten, dass einer Störung des Fahrzeugbetriebs, insbesondere einer Störung der Fahrzeugelektronik, durch eine Aktivität der Kommunikationseinrichtung begegnet werden kann.

Gemäß einer Weiterbildung ist die Kommunikationseinrichtung zur Funkkommunikation ausgestaltet. Die Funkfrequenz kann größer als 300 MHz sein. Diese Weiterbildung kann den Vorteil bieten, dass eine Übertragung durch die Kommunikationseinrichtung von einem beliebigen Ort innerhalb oder außerhalb des Fahrzeugs erfolgen kann.

Gemäß einer Weiterbildung weist die Kommunikationseinrichtung eine GSM-Schaltung auf, welche auf eine Aufforderung der übergeordneten Kommunikationseinrichtung aktivierbar ist. Diese Weiterbildung kann den Vorteil bieten, dass einer funkverursachten Störung des Fahrzeugbetriebs, insbesondere einer funkverursachten Störung der Fahrzeugelektronik, durch eine Aktivität der Kommunikationseinrichtung begegnet werden kann.

Gemäß einer Weiterbildung sind eine oder mehrere der Behälterinformationen mit einem grafischen Code bereitgestellt. Der grafische Code kann als eine Abfolge von verschieden breiten schwarzen und weißen Streifen oder als verschieden breite Striche oder Punkte und dazwischen liegenden Lücken mit möglichst hohem Kontrast (2D-Code) oder als sog. QR-Code ausgebildet sein. Der grafische Code kann mit einer Wandung des Extraktbehälters verbunden und/oder auf einer Außenfläche des Extraktbehälters angeordnet sein.

Alternativ oder zusätzlich sind eine oder mehrere der Behälterinformationen mit einem RFID-Chip bereitgestellt. Der RFID-Chip kann mit einer Wandung des Extraktbehälters verbunden und/oder auf einer Mantelfläche des Extraktbehälters befestigt sein.

Gemäß einer Weiterbildung weist die Kommunikationseinrichtung einen Sensor für RFID-Chips und/oder für grafische Codes auf oder ist mit einem derartigen Sensor signalverbunden. Insbesondere für einen grafischen Code ist der Sensor mit einem CCD Element ausgebildet und kann benachbart zu einer der nachfolgend erläuterten Behälteraufnahmen angeordnet sein.

Gemäß einer Weiterbildung weist die Getränkezubereitungsvorrichtung eine elektronische Steuereinrichtung auf, insbesondere welche abhängig vom Volumen des wenigstens einen Extraktbehälters und abhängig von der Menge des zur Getränkezubereitung entnommenen Getränkeextrakts einen Restinhalt des Extraktbehälters bestimmen kann. Die Steuereinrichtung kann mit einem Mikroprozessor oder als speicherprogrammierbare Steuerung ausgebildet sein. Die Steuereinrichtung kann den Restinhalt M des Extraktbehälters durch wiederholtes Subtrahieren der zur Zubereitung eines Getränkes erforderlichen bzw. zu entnehmenden Menge M₁ von der anfänglich im Extraktbehälter enthaltenen Menge M₀ bestimmen, wobei N für die Anzahl der mit diesem Getränkeextrakt zubereiteten Getränke steht: M = M₀ - N * M₁.

Gemäß einer Weiterbildung ist die Steuereinrichtung ausgestaltet, die Kommunikationseinrichtung zur Übertragung einer der Behälterinformationen, insbesondere der Art des Getränkeextrakts, zu veranlassen, wenn der Restinhalt M des zugehörigen Extraktbehälters einen vorbestimmten Restinhalt M_{g} erstmalig unterschreitet. Dabei kann der vorbestimmte Restinhalt M_{g} dem für ein nächstes Betriebsintervall des Fahrzeugs als erforderlich erachteten Mindestbestand des Getränkeextrakts entsprechen.

Gemäß einer Weiterbildung ist die Steuereinrichtung ausgestaltet, ein extraktgebundenes Flag F_{g} zu setzen, wenn der Restinhalt M des zugehörigen Extraktbehälters den vorbestimmten Restinhalt M_{g} erstmalig unterschreitet. Die Steuereinrichtung kann das extraktgebundene Flag in einem Datenspeicher der Getränkezubereitungsvorrichtung abspeichern.

Gemäß einer Weiterbildung ist die Steuereinrichtung ausgestaltet, die Kommunikationseinrichtung zur Übertragung einer der Behälterinformationen, insbesondere der Art des Getränkeextrakts, abhängig von einem als Behälterinformation codierten Datum zu veranlassen.

Gemäß einer Weiterbildung ist die Kommunikationseinrichtung ausgestaltet, den von der Steuereinrichtung bestimmten Restinhalt M wenigstens eines der Extraktbehälter gemeinsam mit wenigstens einer der Behälterinformationen desselben Extraktbehälters zu übermitteln, insbesondere gemeinsam mit der Art des Getränkeextrakts. Diese Weiterbildung kann den Vorteil bieten, dass der entsprechende Getränkeextrakt zum Füllen des Extraktbehälters oder ein neuer Extraktbehälter mit demselben Getränkeextrakt zum Austausch am Zielort des Fahrzeugs bereitgehalten werden kann.

Gemäß einer Weiterbildung ist die Steuereinrichtung ausgestaltet:
- zur Bestimmung des Restinhalts M eines der Extraktbehälter, insbesondere mittels: M = M₀ - N * M₁,
- zum Setzen eines extraktgebundenen Flags F_{g}, wenn der Restinhalt des Extraktbehälters den zugehörigen vorbestimmten Restinhalts M_{g} insbesondere erstmalig unterschreitet, und
- zur Übermittlung des extraktgebundenen Flags F_{g}, insbesondere gemeinsam mit der Art des vom Extraktbehälter aufgenommenen Getränkextrakts, an die Kommunikationseinrichtung.

Die Kommunikationseinrichtung dieser Weiterbildung ist ausgestaltet, auf eine Aufforderung durch eine übergeordnete Kommunikationseinrichtung das extraktgebundene Flag, insbesondere gemeinsam mit der Art des vom Extraktbehälter aufgenommenen Getränkextrakts, zu übermitteln. Diese Weiterbildung kann den Vorteil bieten, dass der entsprechende Getränkeextrakt zum Füllen des Extraktbehälters oder ein neuer Extraktbehälter mit demselben Getränkeextrakt zum Austausch am Zielort des Fahrzeugs bereitgehalten werden kann.

Gemäß einer Weiterbildung ist die Kommunikationseinrichtung ausgestaltet, auf eine Aufforderung der übergeordneten Kommunikationseinrichtung wenigstens eine der Behälterinformationen an eine dritte Kommunikationseinrichtung zu übermitteln. Diese Weiterbildung kann den Vorteil bieten, dass einer funkverursachten Störung des Fahrzeugbetriebs, insbesondere einer funkverursachten Störung der Fahrzeugelektronik, durch eine Aktivität der Kommunikationseinrichtung begegnet werden kann. Diese Weiterbildung kann den Vorteil bieten, dass eine für die Getränkeextrakte verantwortliche Person, welche Zugang zu der dritten Kommunikationseinrichtung hat, ohne funkverursachte Störung des Fahrzeugbetriebs über einen unerwünscht geringen Restinhalts eines oder mehrerer der Getränkeextrakte informiert werden kann. Diese Weiterbildung kann den Vorteil bieten, dass eine fahrzeuggebundene Kommunikationseinrichtung die Kommunikationseinrichtung der Getränkezubereitungsvorrichtung zur Übermittlung an eine dritte Kommunikationseinrichtung veranlassen kann.

Gemäß einer Weiterbildung ist die Steuereinrichtung ausgestaltet, eine Störung oder einen Zustand der Ausgabemittel oder der Zubereitungsmittel zu erfassen. Die Steuereinrichtung kann aufgrund der erfassten Störung oder des erfassten Zustands eine Störungsmeldung oder Zustandsmeldung erzeugen und diese Störungsmeldung oder Zustandsmeldung insbesondere gemeinsam mit einem Wert, welche auf das Datum und/oder die Uhrzeit der Störung bzw. des Zustands hinweist, in einem Datenspeicher der Getränkezubereitungsvorrichtung abspeichern oder an die Kommunikationseinrichtung übermitteln. Die Störungsmeldung kann auf die Art der Störung oder deren Ursache hinweisen. Diese Weiterbildung kann den Vorteil bieten, dass in dem Datenspeicher Betriebsdaten zu der Getränkezubereitungsvorrichtung gesammelt werden können. Diese Weiterbildung kann den Vorteil bieten, dass eine Störung an eine übergeordnete Kommunikationseinrichtung oder an eine dritte Kommunikationseinrichtung übermittelt werden kann.

Gemäß einer Weiterbildung ist die Steuereinrichtung ausgestaltet, die Ausgabemittel oder Zubereitungsmittel zur Mitteilung eines Zustands oder einer Störung zu veranlassen, insbesondere mittels eines entsprechenden Signals an die Ausgabemittel oder die Zubereitungsmittel. Diese Weiterbildung kann den Vorteil bieten, dass Betriebsdaten gesammelt werden können und/oder dass die Steuereinrichtung den Zustand bzw. die Störung an die Kommunikationseinrichtung übermitteln kann.

Gemäß einer Weiterbildung ist die Steuereinrichtung ausgestaltet, insbesondere auf Veranlassung durch eine übergeordnete Steuereinrichtung, eine übergeordnete Kommunikationseinrichtung oder durch eine Wartungsperson, Daten aus dem Datenspeicher zur Verfügung zu stellen bzw. zu übermitteln. Diese Weiterbildung kann den Vorteil bieten, dass die Wartungsperson Erkenntnisse über den Betrieb der Getränkezubereitungsvorrichtung gewinnen kann.

Gemäß einer Weiterbildung weist die Getränkezubereitungsvorrichtung Zubereitungsmittel zur Zubereitung eines Getränks (Getränkezubereitung) mit Wasser und mit mindestens einem Getränkeextrakt auf, wobei die Zubereitungsmittel von dem Gehäuse aufgenommen sind. Die Zubereitungsmittel können mehrere verschiedene Zubereitungselemente aufweisen, um die Zubereitung von Getränken bewerkstelligen zu können. Vorzugsweise dienen die Zubereitungsmittel bzw. deren Zubereitungselemente:
- der Zubereitung eines insbesondere heißen oder kalten Getränks, unter Verwendung von Wasser und einem der Getränkeextrakte,
- der Bereitstellung, Aufbereitung, Förderung von Wasser,
- der Entnahme von Getränkeextrakt aus einem der Extraktbehälter zur Zubereitung eines Getränks,
- zum Mischen von Wasser mit einem Getränkeextrakte,
- zur Förderung von Wasser und/oder eines zubereiteten Getränks in Richtung der Ausgabemittel.

Der wenigstens eine Extraktbehälter ist, wenn er von der Getränkezubereitungsvorrichtung bzw. deren Gehäuse auswechselbar aufgenommen ist, mit den Zubereitungsmittel fluidverbindbar. Zeitgleich können mehrere der Extraktbehälter mit verschiedenen Getränkeextrakten mit den Zubereitungsmittel fluidverbindbar sein, sodass die Getränkezubereitungsvorrichtung verschiedene Getränke zubereiten und ausgeben kann.

Gemäß einer Weiterbildung sind eines oder mehrere der Zubereitungselemente der Zubereitungsmittel der folgenden Gruppe entnommen, welche beinhaltet: ein Pumpelement zum Fördern von Wasser aus einem Wassertank und/oder Getränkeextrakt in Richtung eines Getränkebehälters, eine elektronische Steuereinrichtung, einen Karbonisator, einen CO₂-Speicher, ein zu kühlendes Zubereitungselement, eine Heizeinrichtung, eine Temperiereinrichtung, eine Mischeinrichtung zum Mischen von Wasser und Getränkeextrakt, einen Wasserfilter, einen Wassertank, eine Behälteraufnahme zur Aufnahme eines der Extraktbehälter.

Gemäß einer Weiterbildung weisen die Zubereitungsmittel mindestens eine Behälteraufnahme auf, welche zur Aufnahme mindestens eines Behälters mit einem Getränkeextrakt ausgestaltet ist. Dabei wird Zugriff auf die mindestens eine Behälteraufnahme zum Austausch des mindestens einen Behälters und/oder zur Reinigung von zugehörigen Elementen ermöglicht, wenn der nachfolgend erläuterte Elementträger aus dem Gehäuse ausgefahren ist und/oder das vordere Gehäuseelement sich in der offenen Position befindet. Die mindestens eine Behälteraufnahme gestattet es wünschenswerterweise, mindestens einen Behälter mit einem Getränkeextrakt an dem Elementträger zu befestigen.

Gemäß einer Weiterbildung ist eines der Zubereitungselemente für die Getränkezubereitung zu kühlen (zu kühlendes Zubereitungselement), wobei die Gestalt eines von einem Kühlmittel durchströmbaren Wärmeaufnahmeelements der Getränkezubereitungsvorrichtung an die Form des zu kühlenden Zubereitungselements angepasst ist, wobei das Wärmeaufnahmeelement mit dem Gehäuse mechanisch verbunden ist, wobei vorzugsweise das zu kühlende Zubereitungselement mit dem nachfolgend erläuterten Elementträger mechanisch verbunden ist. Das Wärmeaufnahmeelement weist eine Berührfläche auf, welche der wärmeleitenden Berührung des zu kühlenden Zubereitungselements dient. Vorzugsweise ist das Wärmeaufnahmeelement Teil einer Kühleinrichtung, welche zudem einen Kühlkompressor zur Verdichtung des Kühlmittels und einen Wärmetauscher zur Abgabe von Wärmeenergie an die Umgebung aufweist, welcher bevorzugt außerhalb des Gehäuses angeordnet ist. Vorteilhaft kann mit dem von dem Wärmeaufnahmeelement trennbaren bzw. entfernbaren zu kühlenden Zubereitungselement auf flexible Rohrleitungen bzw. Schläuche innerhalb der Kühleinrichtung und/oder zum zu kühlenden Zubereitungselement verzichtet werden.

Gemäß einer Weiterbildung weist die Getränkezubereitungsvorrichtung eine Kühleinrichtung zum Kühlen der Zubereitungsmittel bzw. zum Kühlen eines der Zubereitungselemente auf, wobei die Kühleinrichtung im Inneren des Gehäuses und stationär zu diesem angeordnet ist. Die Kühleinrichtung weist ein von einem Kühlmittel durchströmbares Wärmeaufnahmeelement auf und kann einen Kühlkompressor und einen Wärmetauscher aufweisen, welche miteinander fluidleitend verbindbar sind.

Gemäß einer Weiterbildung weist die Getränkezubereitungsvorrichtung zur Zubereitung eines Heißgetränks ein Zubereitungselement auf, welches als Heizeinrichtung zum Erhitzen von für die Getränkezubereitung verwendetem Wasser ausgebildet ist. Vorzugsweise arbeitet die Heizeinrichtung im Wesentlichen drucklos und kann Wasser auf die vom Umgebungsdruck abhängige Siedetemperatur erhitzen. Besonders bevorzugt ist das Zubereitungselement bzw. die Heizeinrichtung als drucklos arbeitender oder atmosphärischer Durchlauferhitzer ausgebildet. Die Heizeinrichtung kann abschnittsweise eine Wasserleitung der Getränkezubereitungsvorrichtung umschließen. Bei dieser Weiterbildung ist der Getränkeextrakt als Sirup ausgebildet. Insbesondere wegen der Verwendung von Sirup während der Zubereitung des Heißgetränks kann auf die Erhöhung des Drucks des Wassers bzw. auf eine Wassertemperatur größer als 8o°C verzichtet werden. Damit kann der Vorteil einer technisch einfacheren Aufbaus und/oder einer weiter verbesserten Betriebssicherheit der Getränkezubereitungsvorrichtung einhergehenVorzugsweise ist die Heizeinrichtung mit dem nachfolgend erläuterten Elementträger verbunden. Dies hat den Vorteil, dass eine Erwärmung des verwendeten Wassers unter Berücksichtigung der vorherrschenden Druckverhältnisse erfolgen kann.

Gemäß einer Weiterbildung weist die Getränkezubereitungsvorrichtung Ausgabemittel zur Ausgabe des zubereiteten Getränks (Getränkeausgabe) auf, wobei wenigstens ein Ausgabeelement der Ausgabemittel mit den Zubereitungsmitteln fluidverbunden ist (erstes Ausgabeelement). Das erste Ausgabeelement kann durch eine Ausnehmung des vorderen Gehäuseelements zugänglich sein. Ausgabemittel können insbesondere der Ausgabe von Wasser und/oder des zubereiteten Getränks an einen unabhängigen Getränkebehälter dienen. Wenigstens eines der Ausgabeelemente ist mit den Zubereitungsmitteln zur Führung von Wasser und/oder zur Führung eines zubereiteten Getränks fluidverbunden.

Gemäß einer Weiterbildung sind eines oder mehrere der Ausgabeelemente der folgenden Gruppe entnommen, welche beinhaltet: eine Gefäßaufnahme für einen unabhängigen Getränkebehälter, beispielsweise ein Trinkgefäß oder ein thermisch isoliertes Vorratsgefäß, und eine Zapfeinheit. Die Gefäßaufnahme kann unterhalb der Zapfeinheit angeordnet sein.

Gemäß einer Weiterbildung können die Zubereitungsmittel mit dem als Zapfeinheit ausgebildeten Ausgabeelement verbunden sein, um das zubereitete Getränk mittels der Zapfeinheit an einen unabhängigen Getränkebehälter abzugeben.

Gemäß einer Weiterbildung ist wenigstens eines der Ausgabeelemente der Ausgabemittel zur Ausgabe eines Getränks ausgestaltet und durch eine Ausnehmung des vorderen Gehäuseelements zugänglich. Alternativ erstreckt wenigstens eines der Ausgabeelemente zur Ausgabe eines Getränks sich aus dem vorderen Gehäuseelement in die Umgebung der Getränkezubereitungsvorrichtung.

Gemäß einer Weiterbildung weist die Gefäßaufnahme einen relativ zu der Zapfeinheit bewegbaren Gefäßhalter auf. Der Gefäßhalter kann dabei dergestalt sein, dass das unabhängige Trinkgefäß in diesen eingehängt werden kann, oder kann so ausgebildet sein, dass das Trinkgefäß auf diesen gestellt werden kann. Im letzteren Fall ist es vorteilhaft, wenn der Gefäßhalter eine Ausnehmung aufweist, in welche das Trinkgefäß gestellt werden kann.

Gemäß einer Weiterbildung weist die Zapfeinheit eine Anzahl von Zapfstellen auf, die vorzugsweise der Anzahl der durch Mischen von Wasser und Getränkeextrakt zubereitbaren Getränke entspricht. Jede Zapfstelle kann einen separaten Auslass an der Zapfeinheit aufweisen und jede Zapfstelle kann eine separate Leitung zur Zufuhr des zubereiteten Getränks aufweisen bzw. mit einer solchen Leitung verbunden sein.

Gemäß einer Weiterbildung ist eines der Ausgabelemente als Erfassungselement zum Erfassen wenigstens einer Dimension eines in die Gefäßaufnahme eingesetzten unabhängigen Getränkebehälters ausgestaltet ist, wobei die von den Zubereitungsmitteln zubereitete Menge des Getränks abhängig von der erfassten Dimension ist. Dazu kann das Erfassungselement mit den Zubereitungsmitteln signalverbunden sein. Ein Höhenmaß des Getränkebehälters, ein Durchmesser des Getränkebehälters und ein Winkel zwischen einer Wandung des Getränkebehälters und einer Vertikalen gelten als Dimension des Getränkebehälters. Vorzugsweise weist die Getränkezubereitungsvorrichtung Rückmeldungsmittel zur Rückmeldung der erfassten Dimension des eingesetzten Getränkebehälters an die Zubereitungsmittel auf. Durch derartige Maßnahmen kann die Anzahl von Zubereitungsschritten durch die Bedienperson verringert werden. Die Weiterbildung kann den Vorteil bieten, dass ein Überlaufen bei der Befüllung des Getränkebehälters und/oder eine unerwünscht geringe Befüllung vermieden werden können.

Gemäß einer Weiterbildung ist die Kommunikationseinrichtung ausgestaltet, eine von der Steuereinrichtung empfangene Störungsmeldung oder Zustandsmeldung insbesondere betreffend die Ausgabemittel oder die Zubereitungsmittel zu übermitteln. Die Kommunikationseinrichtung kann die Störungsmeldung an eine übergeordnete Kommunikationseinrichtung oder auf Veranlassung der übergeordneten Kommunikationseinrichtung an eine dritte Kommunikationseinrichtung übermitteln. Die Weiterbildung kann den Vorteil bieten, dass am Zielort des Fahrzeugs ein Ersatzteil zum Austausch des betreffenden Ausgabeelementes oder Zubereitungselements bereitgehalten werden kann.

Gemäß einer Weiterbildung kann die Getränkezubereitungsvorrichtung ein im Wesentlichen quaderförmiges Gehäuse mit wenigstens einem vorderen Gehäuseelement aufweisen. Auch ein Gehäuseelement, an welchem eine Bedieneinrichtung der Getränkezubereitungsvorrichtung angeordnet oder durch welches eine Gefäßaufnahme für einen unabhängigen Getränkebehälter zugänglich ist, gilt als vorderes Gehäuseelement. Zusätzlich kann das Gehäuse ein hinteres Gehäuseelement sowie jeweils zwei obere, untere und seitlichen Gehäuseelemente aufweisen. Die Abmessungen des Gehäuses bzw. der Gehäuseelemente sind vorzugsweise standardisiert für die Verwendung in unterschiedlichen Flugzeugtypen, vorzugsweise nach einem ARINC-Standard. Dabei können die Gehäuseelemente plattenartig ausgebildet sein. Zudem bestehen diese Gehäuseelemente vorzugsweise aus einem Leichtmetall bzw. aus einer Leichtmetalllegierung oder einem gleichwertigen Kunststoff oder Mehrkomponentenwerkstoff. Das Gehäuse kann Rollen zur Beförderung innerhalb des Fahrzeugs aufweisen.

Gemäß einer Weiterbildung ist das Gehäuse zur Aufnahme bzw. zur Verwendung in einen Standardeinschub in eine Bordküche eines Flugzeugs, eines Schiffs, eines Schienenfahrzeugs, eines Omnibusses oder eines Campingfahrzeugs ausgestaltet, vorzugsweise bemessen.

Gemäß einer Weiterbildung weist die Getränkezubereitungsvorrichtung einen Elementträger auf, an bzw. auf welchem eines oder mehrere der Ausgabeelemente sowie eines oder mehrere der Zubereitungselemente montiert sind. Der Elementträger kann dabei translatorisch im Wesentlichen parallel zu den oberen, unteren und seitlichen Gehäuseelementen bewegbar geführt sein, sodass der Elementträger aus dem Gehäuse wenigstens abschnittsweise ausfahrbar ist. Die Montage der Ausgabemittel bzw. Zubereitungsmittel kann auf bekannte Art und Weise erfolgen. Insbesondere ist es möglich, den Elementträger in Rahmenkonstruktion zu gestalten und die jeweiligen Ausgabemittel bzw. Zubereitungsmittel an entsprechenden Tragelementen des Elementträgers zu befestigen. Dabei können die Ausgabemittel und/oder Zubereitungsmittel hängend oder stehend montiert sein. Um eine translatorische Beweglichkeit des Elementträgers zu verwirklichen, kann der Elementträger mit einer geeigneten Lagerung in dem Gehäuse geführt sein. Die Lagerung kann dabei insbesondere über Rollenlager erfolgen, auf welchen der Elementträger beweglich gelagert ist. Der Elementträger kann für dessen Translation mit einer oder zwei Schienen geführt sein, welche vorzugsweise mit einem der Gehäuseelemente mechanisch verbunden sind. Der Elementträger kann eine Verriegelungsausnehmung aufweisen, in welche ein steuerbares Verriegelungselement der Getränkezubereitungsvorrichtung eingreifen kann, insbesondere wenn das Gehäuse geschlossen ist oder wenn der Elementträger vollständig vom Gehäuse aufgenommen ist. Vorzugsweise ist das Verriegelungselement gehäusefest montiert.

Gemäß einer Weiterbildung können Getränkeextrakte insbesondere Extrakte zur Zubereitung von Kaffee oder Tee sein oder Sirupe insbesondere für Heißgetränke oder andere Extrakte zur Zubereitung von Kaltgetränken. Die Getränkeextrakte können in flüssiger oder trockener Form vorliegen. Insbesondere kann zur Herstellung von Kaltgetränken ein Sirup verwendet werden, wohingegen zur Herstellung von Heißgetränken ein Getränkeextrakt in Form von Granulat oder Pulver verwendet werden kann.

Gemäß einer Weiterbildung kann in dem vorderen Gehäuseelement eine Ausnehmung ausgebildet sein, in welcher die Ausgabemittel zur Ausgabe des zubereiteten Getränks vorgesehen und angeordnet sind. Die Ausgabemittel können unterschiedlicher Art sein und können insbesondere eine Leitung beinhalten, welche das bereits fertig zubereitete Getränk ausgibt, oder können eine Vielzahl von Leitungen aufweisen, welche verschiedene fertige Getränke voneinander getrennt in Richtung der Ausgabemittel führen können, womit eine geschmackliche Beeinträchtigung eines fertigen Getränks durch das zuvor ausgegebene Getränk verringert werden kann. Die Ausnehmung in dem vorderen Gehäuseelement kann dergestalt sein, dass ein Hindurchführen eines zu befüllenden Getränkebehälters durch das vordere Gehäuseelement hindurch möglich ist. Dadurch ist es möglich, den zu befüllenden Getränkebehälter in das Innere des Gehäuses in entsprechende Anordnung zu den Ausgabemitteln zu bringen. Es ist jedoch auch möglich, dass das vordere Gehäuseelement so ausgebildet ist, dass die Ausnehmung in Form einer Vertiefung vorgesehen ist, welche einen von dem Inneren des Gehäuses getrennten Raum definiert, der von einer Vorderseite des Gehäuses zugänglich ist.

Gemäß einer Weiterbildung können wenigstens eines oder mehrere, vorzugsweise sämtliche, der Zubereitungsmittel in eingebautem Zustand der Getränkezubereitungsvorrichtung ausschließlich über das vordere Gehäuseelement zugänglich sein. Zu diesem Zweck kann das vordere Gehäuseelement translatorisch und/oder rotatorisch bewegbar ausgestaltet sein. Das vordere Gehäuseelement kann lösbar, verschieblich oder schwenkbar in Bezug auf die übrigen Gehäuseelemente angeordnet sein. Auch ist es möglich, das vordere Gehäuseelement derart anzuordnen, dass eine kombinierte Bewegung erfolgt. In diesem Zusammenhang kann das vordere Gehäuseelement insbesondere über einen Gelenk- und/oder Hebelmechanismus mit anderen Gehäuseelementen verbunden sein. Diese Anordnung hat den Vorteil, dass bei einem Zugriff auf die Zubereitungsmittel ausschließlich über das vordere Gehäuseelement Fehler oder Unfälle bzw. Verletzungen vermieden werden können, da ein Zugriff über andere Wege nicht vorgesehen ist. Vorteilhaft können Zubereitungsmittel oder Ausgabemittel der Getränkezubereitungsvorrichtung für Wartung, Austausch und/oder Reinigung einfacher zugänglich sein. Dadurch kann ein bestimmter bzw. geforderter hygienischer Zustand der Getränkezubereitungsvorrichtung einfacher hergestellt. Vorteilhaft kann eine Wartung oder ein Austausch eines Zubereitungsmittels oder eines Ausgabemittels, welche für die Funktionsfähigkeit der Getränkezubereitungsvorrichtung erforderlich ist, mit weniger Aufwand möglich sein.

Gemäß einer Weiterbildung wird bei der Getränkezubereitungsvorrichtung in der ausgefahrenen Position des Elementträgers ein Zugriff auf zumindest einen Teil der Zubereitungsmittel ermöglicht. In diesem Zusammenhang können die Ausgabemittel und Zubereitungsmittel so angeordnet sein, dass die Ausgabemittel in einem Zustand erreichbar sind, bei dem der Elementträger sich in der eingefahrenen Position befindet und ein Zugriff auf die Zubereitungsmittel lediglich dann möglich ist, wenn sich der Elementträger in der ausgefahrenen Position befindet. In diesem Zusammenhang ist es möglich, den Zugriff auf zumindest einen Teil der Zubereitungsmittel von einer Seite des Elementträgers zu ermöglichen.

Gemäß einer Weiterbildung kann das vordere Gehäuseelement an dem Elementträger befestigt sein und gemeinsam mit dem Elementträger translatorisch bewegbar sein. Durch eine solche Ausgestaltung ist es nicht erforderlich, das vordere Gehäuseelement in einem separaten Schritt von dem Gehäuse zu trennen bzw. wegzuschwenken, um ein Herausfahren des Elementträgers zu ermöglichen. Somit wird eine Überführung des Elementträgers von der eingefahrenen Position in die ausgefahrene Position erleichtert, da dazu weniger Arbeitsschritte erforderlich sind.

Gemäß einer Weiterbildung kann das vordere Gehäuseelement auch schwenkbar relativ zu dem Gehäuse angebracht sein und zwischen einer offenen und geschlossenen Position bewegbar sein. In der geschlossenen Position verhindert das vordere Gehäuseelement dabei ein Ausfahren des Elementträgers in die ausgefahrene Position und kann daher als Verriegelungsmittel des Elementträgers in der eingefahrenen Position dienen. Das vordere Gehäuseelement ist dabei so gestaltet, dass eine Erreichbarkeit der Ausgabemittel in der geschlossenen Position gegeben ist. Sind insbesondere die Ausgabemittel fest mit dem Elementträger verbunden, so ist das vordere Gehäuseelement wünschenswerterweise mit einer Ausnehmung ausgebildet, durch welche die Ausgabemittel zugänglich sind. Es ist jedoch auch möglich, die Ausgabemittel oder zumindest einen Teil von diesen an dem vorderen Gehäuseelement zu befestigen. In diesem Fall sind die Ausgabemittel ebenfalls schwenkbar relativ zu dem Gehäuse angeordnet und schwenken gemeinsam mit dem vorderen Gehäuseelement zwischen einer offenen und einer geschlossenen Position. In diesem Zusammenhang kann das vordere Gehäuseelement insbesondere mittels eines Scharniermechanismus an einem anderen Gehäuseelement angebracht sein.

Gemäß einer Weiterbildung kann der Elementträger aus dem Gehäuse ausfahrbar sein, nachdem das vordere Gehäuseelement in die offene Position bewegt ist. Mit anderen Worten schränkt die Position des vorderen Gehäuseelements die Beweglichkeit des Elementträgers ein. Das vordere Gehäuseelement kann somit als Sperrelement im Hinblick auf die Beweglichkeit des Elementträgers in dem Gehäuse dienen.

Gemäß einer bevorzugten Weiterbildung ist das vordere Gehäuseelement schwenkbar relativ zu dem Elementträger an dem Elementträger angebracht. Dadurch ist der Elementträger gemeinsam mit dem vorderen Gehäuseelement bewegbar und zwischen einer offenen und geschlossenen Position bewegbar. Durch die schwenkbare Anordnung des vorderen Gehäuseelements ist in der offenen Position ein Zugriff auf die im vorderen Gehäusebereich befindlichen Zubereitungsmittel und/oder Ausgabemittel möglich. Gleichzeitig kann jedoch der Elementträger gemeinsam mit dem vorderen Gehäuseelement ausgefahren werden.

Gemäß einer Weiterbildung kann das mindestens eine zu kühlende Zubereitungselement im eingefahrenen Zustand des Elementträgers mit einem Wärmeaufnahmeelement der Kühleinrichtung in thermischen Kontakt gebracht werden, während es im ausgefahrenen Zustand des Elementträgers von dem Wärmeaufnahmeelement beabstandet ist. Die Kühleinrichtung muss somit nicht auf dem Elementträger befestigt werden, sondern kann stationär in dem Gehäuse verbleiben, wenn der Elementträger in die ausgefahrene Position gebracht wird. Dadurch kann das vom Elementträger zu tragende Gewicht reduziert werden. Indem das Wärmeaufnahmeelement stationär in dem Gehäuse angeordnet ist kann auf flexible Leitungen zum Wärmeaufnahmeelement verzichtet werden. Mit der stationären Anordnung sämtlicher Teile der Kühleinrichtung, insbesondere von deren Wärmeaufnahmeelement, Kühlkompressor und Wärmetauscher, in dem Gehäuse können diese Teile untereinander mit im Wesentlichen biegesteifen Rohrleitungen fluidleitend verbunden sein. Dadurch kann die Betriebsdauer der Kühleinrichtung verlängert sein. Vorteilhaft kann mit der körperlichen Aufteilung in das zu kühlende Zubereitungselement und das der Kühleinrichtung zugehörige durchströmbare Wärmeaufnahmeelement auf flexible Rohrleitungen bzw. Schläuche innerhalb der Kühleinrichtung verzichtet werden.

Gemäß einer Weiterbildung weist das zu kühlende Zubereitungselement einen Karbonisator auf, welcher dem Wasser bzw. dem zubereiteten Getränk CO2 zuführen kann. Insbesondere bildet dieser Karbonisator das zu kühlende Zubereitungselement.

Gemäß einer Weiterbildung kann das Wärmeaufnahmeelement als ein Wärmetauscher ausgebildet sein, in den der Karbonisator derart einfahrbar ist, dass der Wärmetauscher mit zumindest einem Abschnitt der Außenfläche des Karbonisators wärmeleitend, insbesondere formschlüssig oder kraftschlüssig, verbindbar ist.

Gemäß einer Weiterbildung weist die Getränkezubereitungsvorrichtung das Pumpelement, die Steuereinrichtung mit einer Bedieneinrichtung, den Karbonisator mit dem CO2-Speicher, die Kühleinrichtung zum Kühlen des Karbonisators und/oder des verwendeten Wassers auf, wobei die Getränkezubereitungsvorrichtung ausgestaltet ist, ein Kaltgetränk aus Wasser und mindestens einem Getränkeextrakt zu mischen und an der Zapfeinheit auszugeben.

Gemäß einer Weiterbildung ist das Wärmeaufnahmeelement mit einem verformbaren Kissen ausgebildet, welches mit einer Kraftkomponente in Richtung des zu kühlenden Zubereitungselements beaufschlagt werden kann. Insbesondere wenn der Elementträger in seinen eingefahrenen Zustand überführt ist und das zu kühlende Zubereitungselement und Wärmeaufnahmeelement einander wärmeleitend berühren, ist das Wärmeaufnahmeelement für verbesserten thermischen Kontakt mit einer Kraftkomponente in Richtung des zu kühlenden Zubereitungselements beaufschlagt, vorzugsweise federbelastet.

Gemäß einer Weiterbildung ist, wenn das, insbesondere als Karbonisator ausgestaltete, zu kühlende Zubereitungselement eine gekrümmte Mantelfläche aufweist, welche dem Wärmeaufnahmeelement zugewandt ist, auch die Berührfläche mit einer Krümmung ausgebildet bzw. ist das Wärmeaufnahmeelement abschnittsweise schalenförmig ausgebildet. Insbesondere entspricht der Krümmungsradius der Berührfläche im Wesentlichen dem Radius der gekrümmten Mantelfläche. Wenn das, insbesondere als Karbonisator ausgestaltete, zu kühlende Zubereitungselement eine im Wesentlichen ebene Mantelfläche aufweist, welche dem Wärmeaufnahmeelement zugewandt ist, dann weist auch das Wärmeaufnahmeelement eine im Wesentlichen ebene Berührfläche auf.

Gemäß einer Weiterbildung ist für verbesserte Kühlleistung eine von der Berührfläche verschiedene Mantelfläche des Wärmeaufnahmeelements thermisch isoliert bzw. weist das Wärmeaufnahmeelement eine von dem zu kühlenden Zubereitungselement abgewandte Isolierschicht auf.

Gemäß einer Weiterbildung ist eines der Zubereitungsmittel als Gruppe von Mischeinrichtungen (Mischbatterie) ausgebildet, welche jeweils zum Mischen eines der Getränkeextrakte mit Wasser dienen. Vorzugsweise ist die Mischbatterie mittels mehreren Rohrleitungen mit verschiedenen Zapfstellen eines als Zapfeinheit ausgebildeten Ausgabemittels verbunden, womit eine geschmackliche Beeinträchtigung eines fertigen Getränks durch das zuvor ausgegebene Getränk verringert bzw. vermieden werden kann. Zur Nutzung der Schwerkraft bei der Zufuhr eines der Getränkeextrakte kann der Extraktbehälter bezüglich der Schwerkraft oberhalb von der Mischbatterie angeordnet sein. Der Mischbatterie kann mit verschiedenen Extraktbehältern über separate Zuleitungen verbunden sein, insbesondere um einer geschmacklichen Beeinträchtigung der fertigen Getränke zu begegnen.

Gemäß einer Weiterbildung weist die Getränkezubereitungsvorrichtung ein zu kühlendes Zubereitungselement, eine Kühleinrichtung und ein als Heizeinrichtung ausgebildetes Zubereitungsmittel auf. Vorzugsweise ist das zu kühlende Zubereitungselement als Karbonisator ausgebildet. Vorzugsweise sind das zu kühlende Zubereitungselement und/oder die Heizeinrichtung mit einem der Elementträger mechanisch verbunden. Vorzugsweise wird das Wasser durch zwei verschiedene Leitungen zur Mischbatterie geführt, wobei eine der Leitungen gekühltes Wasser und die andere der Leitungen das erwärmte bzw. erhitzte Wasser führt. Diese Weiterbildung der Getränkezubereitungsvorrichtung kann sowohl heiße als auch kalte Getränke zubereiten.

Gemäß einer Weiterbildung weist die Getränkezubereitungsvorrichtung ein Meldeelement auf, welches, auf eine erfolgte Öffnung des Gehäuses bzw. eine Betätigung des vorderen Gehäuseelements hinweisen kann, insbesondere mittels einem elektronisch verarbeitbaren Signal. Dazu kann das Meldeelement benachbart zu dem vorderen Gehäuseelement an einem der Gehäuseelemente oder an einer Wandung des Gehäuses befestigt sein. Das Meldeelement kann als elektromechanischer Schalter, insbesondere als Mikroschalter, ausgebildet und/oder mit einer elektronischen Steuereinrichtung der Getränkezubereitungsvorrichtung elektrisch verbunden sein.

Gemäß einer Weiterbildung welche das Meldeelement und eine elektronische Steuereinrichtung aufweist, ist die Getränkezubereitungsvorrichtung insbesondere auf ein Signal des Meldeelements in einen Wartungsmodus überführbar. Im Wartungsmodus ist wenigstens eines der Zubereitungsmittel nicht energieversorgt bzw. abgeschaltet. Der Wartungsmodus kann eine oder mehrere der folgenden Eigenschaften aufweisen, insbesondere auf Veranlassung durch die Steuereinrichtung:
- Abgeschaltete Pumpe, Heizeinrichtung und/oder Kühleinrichtung, und/oder
- Ein zu kühlendes, insbesondere mit einem Karbonisator ausgebildetes, Zubereitungselement ist von einem gehäusefesten Wärmeaufnahmeelement einer Kühleinrichtung der Getränkezubereitungsvorrichtung beabstandet, und/oder
- Das Gehäuse ist geöffnet, und/oder
- Der Elementträger ist ausgefahren oder kann ausgefahren werden, und/oder
- Ein Wasserabsperrventil der Getränkezubereitungsvorrichtung ist geschlossen, und/oder
- Die Zapfstelle ist gesperrt, und/oder
- Ein Verriegelungselement der Getränkezubereitungsvorrichtung, welches einer Verlagerung des Elementträgers entgegenwirken kann, insbesondere welches in den Elementträger eingreifen kann, ist gelöst, und/oder
- Ein Zubereitungsmittel oder Ausgabemittel kann gereinigt oder ausgetauscht werden, und/oder
- Eine defekte Baugruppe der Getränkezubereitungsvorrichtung kann repariert oder ausgetauscht werden,
- Ein Extraktbehälter kann gewechselt werden.

Diese Weiterbildung kann den Vorteil bieten, dass eine Gefährdung der Umgebung durch Zubereitungsmittel, energieversorgte Bauteile und/oder wasserführende Bauteile verringert ist.

Gemäß einer Weiterbildung weist die Getränkezubereitungsvorrichtung einen Wasserbehälter und einen elektrischen Energiespeicher bzw. eine Sekundärbatterie auf. Diese Weiterbildung kann den Vorteil bieten, dass das die Getränkezubereitungsvorrichtung zeitweise ohne Zuleitungen betrieben werden kann.

Vorteilhaft weist eine Anordnung eine Getränkezubereitungsvorrichtung gemäß dem ersten Aspekt oder gemäß einer der Weiterbildungen und wenigstens einen, dieser Extraktbehälter auf, wobei der Extraktbehälter von der Getränkezubereitungsvorrichtung auswechselbar aufgenommen ist. Vorzugsweise sind mehrere dieser Extraktbehälter zeitgleich von der Getränkezubereitungsvorrichtung auswechselbar aufgenommen.

Vorteilhaft weist ein Fahrzeug, insbesondere ein Flugzeug, eine Getränkezubereitungsvorrichtung gemäß dem ersten Aspekt oder gemäß einer der vorgenannten Weiterbildungen auf.

Eine Weiterbildung des Verfahrens des zweiten Aspekts weist die Schritte auf:
S1 Lesen einer der Behälterinformationen wenigstens eines der Extraktbehälter (erster Extraktbehälter), insbesondere durch die Kommunikationseinrichtung oder durch einen mit der Kommunikationseinrichtung signalverbundenen Sensor, insbesondere Lesen des Behältervolumens des ersten Extraktbehälters oder der anfänglich im Extraktbehälter enthaltenen Menge M₀ des Getränkeextrakts, insbesondere vor Schritt S3,
S2 Bestimmen des Restinhalts M des ersten Extraktbehälters, insbesondere durch eine Steuereinrichtung der Getränkezubereitungsvorrichtung, insbesondere einschließlich Setzen eines extraktgebundenen Flags wenn der Restinhalt M einen vorbestimmten Restinhalt M_{g} unterschreitet,
S3 Empfangen einer Aufforderung einer übergeordneten Kommunikationseinrichtung, insbesondere durch die Kommunikationseinrichtung,
insbesondere einschließlich Übermitteln der Aufforderung an die Steuereinrichtung,
S4 Übermitteln des Restinhalts M wenigstens eines der Extraktbehälter gemeinsam mit wenigstens einer der Behälterinformationen des Extraktbehälters, oder
Übermitteln des extraktgebundenen Flags, insbesondere durch die Kommunikationseinrichtung, insbesondere nach Schritt S2, insbesondere nach Schritt S3.

Während Schritt S2 erfolgt das Bestimmen des Restinhalts M unter wiederholtem Subtrahieren der zur Zubereitung eines Getränkes erforderlichen bzw. zu entnehmenden Menge M₁ von der anfänglich im Extraktbehälter enthaltenen Menge M₀ bestimmen, wobei N für die Anzahl der mit diesem Getränkeextrakt zubereiteten Getränke steht: M = M₀ - N * M₁.

Schritt S4 stellt eine Konkretisierung des Schrittes S0 (Übermitteln wenigstens einer Behälterinformation) dar, indem der Restinhalt M eine der übermittelten Behälterinformationen bildet. Vorzugsweise wird Schritt S4 anstelle von Schritt S0 ausgeführt.

Gemäß einer Weiterbildung schließt Schritt S3 ein: Prüfen wenigstens eines Restinhalts M (Schritt S3a), und/oder Setzen des extraktgebundenen Flags wenn der Restinhalt M den vorbestimmten Restinhalt M_{g} unterschreitet (Schritt S3b). Das Prüfen erfolgt unter Vergleichen des Restinhalts M mit dem vorbestimmten Restinhalt M_{g}. Wenn der Restinhalt M den vorbestimmten Restinhalt M_{g} unterschreitet, dann setzt die Steuereinrichtung das extraktgebundene Flag.

Gemäß einer Weiterbildung schließt Schritt S4 ein: Übermitteln der Art des Getränkeextrakts des Extraktbehälters, dessen Restinhalt M den vorbestimmten Restinhalt M_{g} unterschreitet.

Gemäß einer Weiterbildung werden die Schritte in der Reihenfolge S3, S1, S2, S4 ausgeführt.

Eine Weiterbildung des Verfahrens des zweiten Aspekts weist einen oder mehrere der folgenden Schritte auf:
S5 Übermitteln einer Störungsmeldung, insbesondere nach Schritt S3, insbesondere durch die Kommunikationseinrichtung, und/oder
S6 Wechseln wenigstens eines der Extraktbehälter aufgrund von Schritt S4, und/oder
S7 Wechseln oder Warten eines der Ausgabeelemente oder eines der Zubereitungselemente aufgrund von Schritt S5.

Ein zweites Verfahren zum Betrieb einer Getränkezubereitungsvorrichtung zur Zubereitung und Ausgabe von heißen und/oder kalten Getränken, insbesondere gemäß dem ersten Aspekt oder gemäß einer der vorgenannten Weiterbildungen, weist die Schritte auf:
S11 Öffnen eines vorderen Gehäuseelements eines im Wesentlichen quaderförmigen Gehäuses der Getränkezubereitungsvorrichtung, mit translatorischer und/oder rotatorischer Bewegung des vorderen Gehäuseelements,
S12 Reinigen oder Wechseln wenigstens eines von mehreren Zubereitungselementen der Zubereitungselemente der Getränkezubereitungsvorrichtung, wobei die Zubereitungsmittel zur Zubereitung von Getränken mit Wasser und mit mindestens einem Getränkeextrakt ausgebildet sind, wobei die Zubereitungsmittel in eingebautem Zustand der Getränkezubereitungsvorrichtung ausschließlich über das vordere Gehäuseelement zugänglich sind,
S13 Reinigen oder Wechseln wenigstens eines von mehreren Ausgabeelementen der Ausgabemitteln der Getränkezubereitungsvorrichtung, insbesondere wobei die Ausgabemittel zur Ausgabe des zubereiteten Getränks in einer Ausnehmung in dem vorderen Gehäuseelement ausgebildet und angeordnet sind.

Die Schritte S12 und S13 können zeitgleich oder nacheinander durchgeführt werden.

Das zweite Verfahren kann den Vorteil bieten, dass Zubereitungsmittel oder Ausgabemittel der Getränkezubereitungsvorrichtung für Wartung, Austausch und/oder Reinigung einfacher zugänglich sind. Dadurch kann ein bestimmter bzw. geforderter hygienischer Zustand der Getränkezubereitungsvorrichtung einfacher hergestellt werden. Das zweite Verfahren kann den Vorteil bieten, dass eine Wartung oder ein Austausch eines Zubereitungsmittels oder eines Ausgabemittels, welche für die Funktionsfähigkeit der Getränkezubereitungsvorrichtung erforderlich ist, mit weniger Aufwand möglich ist.

Gemäß einer Weiterbildung weist das zweite Verfahren wenigstens einen der folgenden Schritte auf:
S14 Ausfahren eines Elementträgers der Getränkezubereitungsvorrichtung, auf bzw. an welchem wenigstens eines der Ausgabeelemente und/oder wenigstens eines der Zubereitungselemente montiert sind, aus dem Gehäuse, wobei der Elementträger translatorisch im Wesentlichen parallel zu oberen, unteren und seitlichen Gehäuseelementen des Gehäuses bewegbar geführt ist, vorzugsweise vor Schritt S12, vorzugsweise worauf in der ausgefahrenen Position des Elementträgers ein Zugriff auf wenigstens eines oder mehrere der Zubereitungselemente und/oder wenigstens eines oder mehrere der Ausgabeelemente möglich ist, und/oder
S15 Überführen der Getränkezubereitungsvorrichtung in einen Wartungsmodus, insbesondere durch eine elektronische Steuereinrichtung der Getränkezubereitungsvorrichtung, insbesondere auf ein Signal eines Meldeelementes der Getränkezubereitungsvorrichtung, worauf zumindest eines der Zubereitungsmittel nicht energieversorgt ist, insbesondere auf Veranlassung durch die elektronische Steuereinrichtung, insbesondere vor Schritt S12, insbesondere vor Schritt S14.

Vorzugsweise erfolgt, insbesondere auf Veranlassung durch die elektronische Steuereinrichtung, während Schritt S15:
- Abschalten einer Pumpe, Heizeinrichtung und/oder Kühleinrichtung der Getränkezubereitungsvorrichtung, und/oder
- Schließen eines Wasserabsperrventils der Getränkezubereitungsvorrichtung, und/oder
- Sperren der Zapfstelle, und/oder
- Lösen eines Verriegelungselements der Getränkezubereitungsvorrichtung, welches vor dem Lösen einer Verlagerung des Elementträgers entgegenwirkt, insbesondere in den Elementträger eingreift.

Im Anschluss an den Schritt S15 kann
- der Elementträger der Getränkezubereitungsvorrichtung ausgefahren werden, und/oder
- das trägermontierte zu kühlende Zubereitungselement von dem gehäusefesten Wärmeaufnahmeelement beabstandet werden, und/oder
- eines der Zubereitungselemente, eines der Ausgabeelemente, die Kühleinrichtung, die Heizeinrichtung und/oder eine sonstige Baugruppe der Getränkezubereitungsvorrichtung gereinigt, repariert und/oder ausgetauscht werden.

Diese Weiterbildung kann den Vorteil bieten, dass eine Gefährdung der Umgebung oder einer Wartungsperson durch ein Zubereitungsmittel, ein Ausgabemittel, ein energieversorgtes Bauteil und/oder ein wasserführendes Bauteil der Getränkezubereitungsvorrichtung verringert ist.

Ein drittes Verfahren zum Betrieb der Getränkezubereitungsvorrichtung weist die Schritte auf:
S20 Erfassen eines Zustands der Zubereitungsmittel (Zustandserfassung) durch die Steuereinrichtung, wobei die Zubereitungsmittel zur Mitteilung eines gestörten Zustands (Störung) ausgestaltet sind, insbesondere auf Veranlassung durch die Kommunikationseinrichtung, insbesondere nach Schritt S3,
S21 Erzeugen einer Störungsmeldung, insbesondere welche auf die Art der Störung oder deren Ursache hinweist, wenn durch die Zustandserfassung eine Störung der Zubereitungsmittel erfasst ist, insbesondere durch die Steuereinrichtung,
S3 Empfangen einer Aufforderung einer übergeordneten Kommunikationseinrichtung durch die Kommunikationseinrichtung,
S5 Übermitteln der Störungsmeldung durch die Kommunikationseinrichtung, insbesondere an die übergeordnete Kommunikationseinrichtung oder an eine dritte, insbesondere am Zielort oder bei einem Ersatzteillager befindliche, Kommunikationseinrichtung, insbesondere nach den Schritten S3 und S21.

Daraufhin kann ein Ersatzteil oder Material zur Reparatur des die Störung aufweisenden Zubereitungselements am Zielort des Fahrzeugs bereitgehalten werden kann. Diese Weiterbildung kann den Vorteil bieten, dass der Zeitaufwand zur Wartung bzw. Instandsetzung der Getränkezubereitungsvorrichtung verringert werden kann.

### Ausführungsbeispiele

Figur 1 zeigt schematisch ein erstes Ausführungsbeispiel der Getränkezubereitungsvorrichtung,
Figur 2 zeigt schematisch ein zweites Ausführungsbeispiel der Getränkezubereitungsvorrichtung,
Figur 3 zeigt schematisch eine Einzelheit einer Weiterbildung der Getränkezubereitungsvorrichtung mit Mischbatterie,
Figur 4 zeigt schematisch ein Ausführungsbeispiel der Getränkezubereitungsvorrichtung, welche sowohl kalte als auch heiße Getränke zubereiten kann,
Figur 5 zeigt schematisch ein Ausführungsbeispiel der Getränkezubereitungsvorrichtung für Kaltgetränke,
Figur 6 zeigt schematisch ein Ausführungsbeispiel der Getränkezubereitungsvorrichtung für Heißgetränke,
Figur 7 zeigt schematisch ein Ausführungsbeispiel der Getränkezubereitungsvorrichtung mit einem Elementträger, welche sowohl kalte als auch heiße Getränke zubereiten kann,
Figur 8 zeigt schematisch Einzelheiten eines Ausführungsbeispiels der Getränkezubereitungsvorrichtung mit einem zu kühlenden Zubereitungselement und einem durchströmbaren Wärmeaufnahmeelement,
Figur 9 zeigt schematisch alternative Ausführungsbeispiele der Getränkezubereitungsvorrichtung mit Elementträger,
Figur 10 zeigt Flussdiagramme von Weiterbildungen des Verfahrens gemäß dem zweiten Aspekt,
Figur 11 zeigt Flussdiagramme eines dritten Verfahrens zum Betrieb einer der Getränkezubereitungsvorrichtungen.

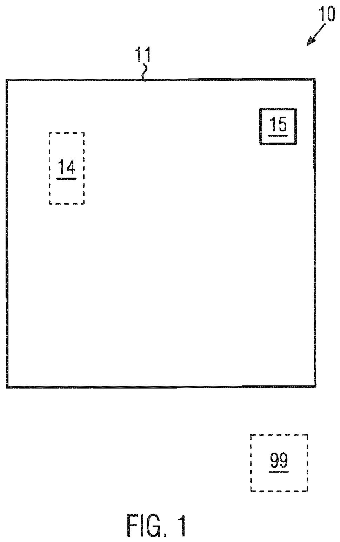

Fig. 1 zeigt schematisch ein erstes Ausführungsbeispiel der Getränkezubereitungsvorrichtung. Die Getränkezubereitungsvorrichtung 10 weist das fahrbare Gehäuse 11 sowie die Kommunikationseinrichtung 15 auf. Der vom Gehäuse aufnehmbare unabhängige Extraktbehälter 14 und die nicht der Getränkezubereitungsvorrichtung zugehörige übergeordnete Kommunikationseinrichtung 99 sind mit gestrichelten Linien dargestellt. Vorzugsweise weist die Getränkezubereitungsvorrichtung eine Sekundärbatterie zur Energieversorgung der elektrischen Zubereitungsmittel und einen Wasserbehälter auf.

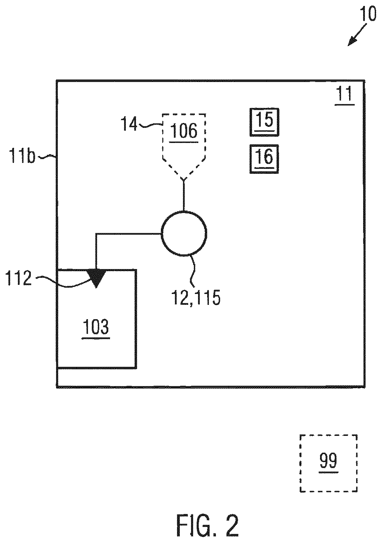

Figur 2 zeigt schematisch ein zweites Ausführungsbeispiel der Getränkezubereitungsvorrichtung. Abweichend von der Getränkezubereitungsvorrichtung der Figur 1 weist die Getränkezubereitungsvorrichtung zusätzlich Zubereitungsmittel 12, welche eine Mischeinrichtung 115 aufweisen, eine Gefäßaufnahme 103 sowie eine Zapfeinheit 112 auf. Die Zapfeinheit ist innerhalb der Gefäßaufnahme angeordnet und über eine Getränkezuleitung mit den Zubereitungsmitteln 12 fluidverbunden. Eine Wasserzuleitung führt zu der Mischeinrichtung. Die Mischeinrichtung ist mit dem unabhängigen Extraktbehälter 14 fluidverbunden, wobei der gestrichelt dargestellte Extraktbehälter einen Getränkeextrakt 106 enthält. Vorzugsweise weist die Getränkezubereitungsvorrichtung eine Sekundärbatterie zur Energieversorgung der elektrischen Zubereitungsmittel und einen Wasserbehälter auf.

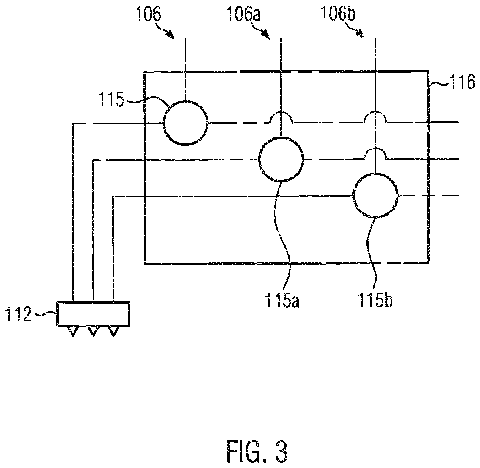

Figur 3 zeigt schematisch eine Einzelheit einer Weiterbildung der Getränkezubereitungsvorrichtung mit einer Mischbatterie 116. Die Mischbatterie weist mehrere Mischeinrichtungen 115, 115a, 115b auf, welche jeweils über separate Getränkezuleitungen mit der Zapfeinheit 112 fluidverbunden sind, welchen jeweils ein Getränkeextrakt 106, 106a, 106b zugeführt werden kann und zu welchen jeweils eine Wasserzuleitung führt. Die Zapfeinheit weist für jede Getränkezuleitung eine eigene Zapfstelle auf. Bei dieser Ausführung ist einer geschmacklichen Beeinträchtigung eines zubereiteten Getränks begegnet.

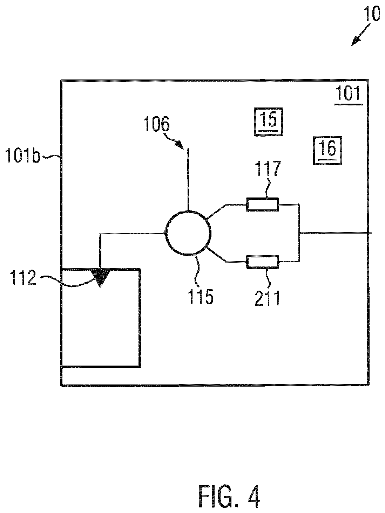

Figur 4 zeigt schematisch ein Ausführungsbeispiel der Getränkezubereitungsvorrichtung, welche zur Zubereitung und Ausgabe von heißen und kalten Getränken in einem Fahrzeug ausgestaltet ist. Abweichend von der Getränkezubereitungsvorrichtung der Figur 2 ist die Getränkezubereitungsvorrichtung zusätzlich mit einem zu kühlenden Zubereitungselement 117 und mit einer Heizeinrichtung 211 ausgebildet. Insbesondere ist das zu kühlende Zubereitungselement 117 als Karbonisator ausgebildet. Die Heizeinrichtung 211 und das zu kühlende Zubereitungselement 117 sind in verschiedenen Zweigen bzw. an verschiedenen Wasserzuleitungen jeweils stromaufwärts von der Mischeinrichtung 115 angeordnet. Vorzugsweise weist die Getränkezubereitungsvorrichtung eine Sekundärbatterie zur Energieversorgung der elektrischen Zubereitungsmittel und einen Wasserbehälter auf.

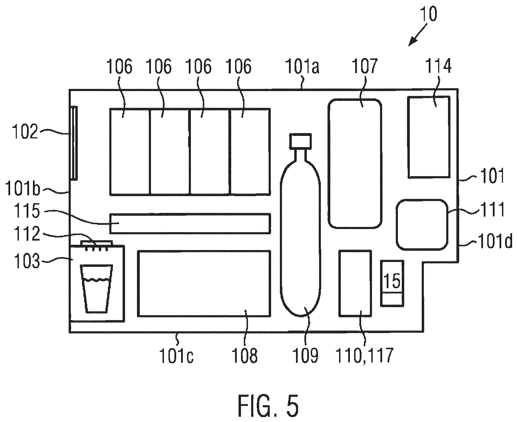

Figur 5 zeigt schematisch ein Ausführungsbeispiel der Getränkezubereitungsvorrichtung für kalte Getränke. Die Getränkezubereitungsvorrichtung ist mit einem im Wesentlichen quaderförmigen Gehäuse 101 ausgebildet; mit Zubereitungsmitteln zur Zubereitung von Getränken mit Wasser und mindestens einem Getränkeextrakt 106; mit Ausgabemitteln zur Ausgabe des zubereiteten Getränks in einer Ausnehmung in dem vorderen Gehäuseelement 101b; wobei die Zubereitungsmittel in eingebautem Zustand der Getränkezubereitungsvorrichtung ausschließlich über das vordere Gehäuseelement 100b zugänglich sind. Dazu ist das vordere Gehäuseelement translatorisch und/oder rotatorisch bewegbar ausgestaltet.

Das vordere Gehäuseelement 101b weist eine Ausnehmung auf, welche als Vertiefung ausgebildet ist. Die Getränkezubereitungsvorrichtung weist mehrere nebeneinander angeordnete Behälteraufnahmen für Behälter mit Getränkeextrakt 106, einen Wasserfilter 107, ein Pumpelement 108, einen CO2-Speicher 109, einen Karbonisator 110, einen Kühlkompressor 111, eine Mischeinrichtung 115, eine Gefäßaufnahme 103 und eine Zapfeinheit 112 auf. Vorteilhaft sind der Kühlkompressor 111 und der Wärmetauscher 114 gehäusefest montiert. Vorzugsweise weist die Kühleinrichtung der Getränkezubereitungsvorrichtung ein Wärmeaufnahmeelement auf, welches zur wärmeleitenden Berührung des Karbonisators 110 ausgestaltet und gehäusefest montiert ist.

Nicht dargestellt sind Rohrleitungen zur Führung des Wassers, des Getränkeextrakts oder des zubereiteten Getränks. Nicht dargestellt ist die Steuereinrichtung 16. Vorteilhaft passiert das über den Wasseranschluss 104 zugeführte Wasser den Wasserfilter 107, das Pumpelement 108, den Karbonisator 110 und wird in der Mischeinrichtung 115 mit wenigstens einem der Getränkeextrakte 106 gemischt. Das zubereitete Getränk wird über die Zapfeinheit 112 in einen in der Gefäßaufnahme 103 befindlichen Getränkebehälter abgegeben. Vorzugsweise werden die verschiedenen Getränke durch separate Rohrleitungen zu verschiedenen Zapfstellen der Zapfeinheit 112 geführt, womit einer geschmacklichen Beeinträchtigung eines zubereiteten Getränks durch ein zuvor ausgegebenes Getränk begegnet werden kann.

Vorzugsweise weist die Getränkezubereitungsvorrichtung eine Sekundärbatterie zur Energieversorgung der elektrischen Zubereitungsmittel und einen Wasserbehälter auf. Vorzugsweise weist die Getränkezubereitungsvorrichtung Erfassungsmittel für wenigstens eine Dimension des Getränkebehälters auf, wobei die erfasste Dimension für die Bemessung des zuzuführenden Wassers berücksichtigt wird. Wenigstens eines der Ausgabeelemente und/oder wenigstens eines der Zubereitungselemente kann nach Öffnen des vorderen Gehäuseelements einfacher gewartet, gereinigt oder ausgetauscht werden.

Vorzugsweise sind der Wasserfilter 107, das Pumpelement 108, der CO2-Speicher 109, der Karbonisator 110, die Zapfeinheit 112, die Mischeinrichtung 115, an einem Elementträger der Getränkezubereitungsvorrichtung montiert, wobei der Elementträger wenigstens abschnittsweise aus dem Gehäuse in die Umgebung verlagert werden bzw. ausgefahren kann. Vorzugsweise weist die Getränkezubereitungsvorrichtung eines der Meldeelemente auf und kann in den Wartungsmodus überführt werden. Vorzugsweise weist das Gehäuse Rollen zur Beförderung der Getränkezubereitungsvorrichtung im Fahrzeug auf.

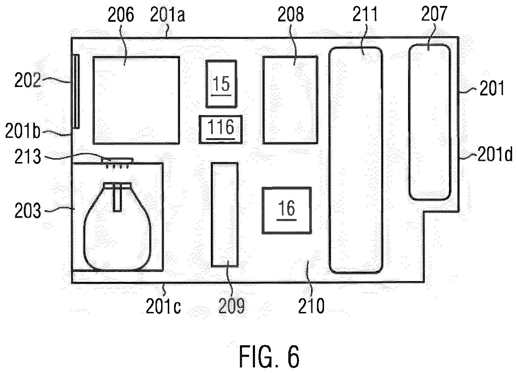

Fig. 6 zeigt schematisch ein weiteres Ausführungsbeispiel der Getränkezubereitungsvorrichtung, welche zur Zubereitung und Ausgabe von heißen Getränken vorgesehen ist. Die Getränkezubereitungsvorrichtung ist mit einem im Wesentlichen quaderförmigen Gehäuse 201 mit wenigstens einem vorderen Gehäuseelement 201b ausgebildet; mit Zubereitungsmitteln zur Zubereitung von Getränken mit Wasser und mindestens einem Getränkeextrakt 206; mit Ausgabemitteln zur Ausgabe des zubereiteten Getränks in einer Ausnehmung in dem vorderen Gehäuseelement 201b; wobei die Zubereitungsmittel in eingebautem Zustand der Getränkezubereitungsvorrichtung ausschließlich über das vordere Gehäuseelement 201b zugänglich sind. Dazu ist das vordere Gehäuseelement translatorisch und/oder rotatorisch bewegbar ausgestaltet.

Das vordere Gehäuseelement 201b weist eine Ausnehmung auf, welche als Vertiefung ausgebildet ist. Die Getränkezubereitungsvorrichtung weist eine oder mehrere Behälteraufnahmen für Behälter mit Getränkeextrakt 206, einen Wasserfilter 207, ein Pumpelement 208, eine Steuereinrichtung 209, einen Wassererhitzer 211, eine Gefäßaufnahme 203 und eine Zapfeinheit 213 auf. Nicht dargestellt sind Rohrleitungen zur Führung des Wassers, des Getränkeextrakts oder des zubereiteten Getränks.

Vorteilhaft passiert das über den Wasseranschluss 204 zugeführte Wasser den Wasserfilter 207, das Pumpelement 208, den Wassererhitzer 211 und wird mit wenigstens einem der Getränkeextrakte 206 gemischt. Das zubereitete Getränk wird über die Zapfeinheit 213 in einen in der Gefäßaufnahme 203 befindlichen Getränkebehälter abgegeben. Vorzugsweise werden verschiedene Getränke durch separate Rohrleitungen zu verschiedenen Zapfstellen der Zapfeinheit 212 geführt.

Vorzugsweise weist die Getränkezubereitungsvorrichtung eine Sekundärbatterie zur Energieversorgung der elektrischen Zubereitungsmittel und einen Wasserbehälter auf. Vorzugsweise ist eines der Ausgabeelemente als Erfassungselement für wenigstens eine Dimension des Getränkebehälters ausgebildet, wobei die erfasste Dimension für die Bemessung des zuzuführenden Wassers berücksichtigt wird.

Wenigstens eines der Ausgabeelemente und/oder wenigstens eines der Zubereitungselemente kann nach Öffnen des vorderen Gehäuseelements einfacher gewartet, gereinigt oder ausgetauscht werden. Vorzugsweise weist die Getränkezubereitungsvorrichtung eines der Meldeelemente auf und kann in den Wartungsmodus überführt werden. Vorzugsweise weist das Gehäuse Rollen zur Beförderung der Getränkezubereitungsvorrichtung im Fahrzeug auf.

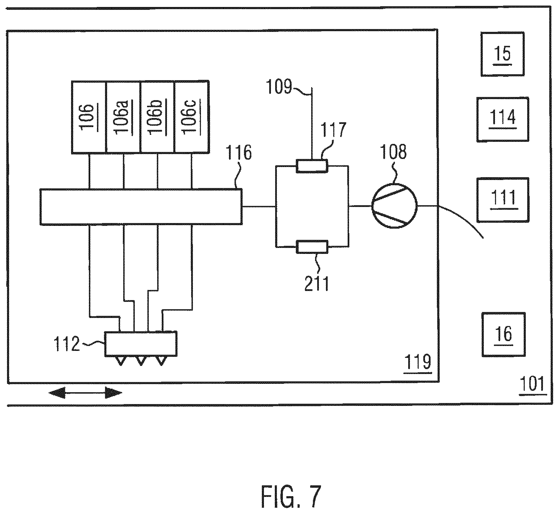

Figur 7 zeigt schematisch ein Ausführungsbeispiel der Getränkezubereitungsvorrichtung mit einem Elementträger 119, welche kalte und heiße Getränke zubereiten kann. Mit dem Elementträger 119 sind mechanisch verbunden: die Mischbatterie 116, die Zapfeinheit 112, die Heizeinrichtung 211, das zu kühlende Zubereitungselement 117, der CO2-Speicher 109, das Pumpenelement 108, sowie mehrere Behälteraufnahmen für Extraktbehälter mit Getränkeextrakt 106, 106a, 106b, 106c. Vorzugsweise ist das zu kühlende Zubereitungselement 117 als Karbonisator ausgebildet. Ein Wärmetauscher 114, ein Kühlkompressor 111, das Kommunikationselement 15 sind gehäusefest.

Das von einem Kühlmittel durchströmbare Wärmeaufnahmeelement ist zwar nicht dargestellt, es ist aber mechanisch mit dem Gehäuse 101 verbunden. In der dargestellten und bezüglich des Gehäuses eingefahrenen Position des Elementträgers 119 ist das Wärmeaufnahmeelement mit dem zu kühlenden Zubereitungselement 117 wärmeleitend verbunden. Vorzugsweise ist das Wärmeaufnahmeelement in der eingefahrenen Position des Elementträgers mit einer Kraft in Richtung des zu kühlenden Zubereitungselements 117 beaufschlagt. Vorzugsweise ist das Wärmeaufnahmeelement mit einem verformbaren Kissen ausgebildet, für verbesserten thermischen Kontakt mit dem zu kühlenden Zubereitungselement 117. In einer nicht dargestellten und bezüglich des Gehäuses ausgefahrenen Position des Elementträgers 119 ist das Wärmeaufnahmeelement von dem zu kühlenden Zubereitungselement 117 getrennt bzw. beabstandet. Vorteilhaft können Teile der Kühleinrichtung, beinhaltend den Wärmetauscher 114, den Kühlkompressor 111 und das nicht dargestellte Wärmeaufnahmeelement untereinander mit im Wesentlichen biegesteifen Rohrleitungen verbunden sein, womit die mechanische Stabilität der Kühleinrichtung verbessert ist. Vorteilhaft kann mit der körperlichen Aufteilung in ein zu kühlendes Zubereitungselement 117 und ein durchströmbares Wärmeaufnahmeelement auf flexible Rohrleitungen bzw. Schläuche innerhalb der Kühleinrichtung verzichtet werden.

Vorzugsweise weist die Getränkezubereitungsvorrichtung eines der Meldeelemente auf und kann in den Wartungsmodus überführt werden. Vorzugsweise weist das Gehäuse Rollen zur Beförderung der Getränkezubereitungsvorrichtung im Fahrzeug auf. Vorzugsweise weist die Getränkezubereitungsvorrichtung eine Sekundärbatterie zur Energieversorgung der elektrischen Zubereitungsmittel und einen Wasserbehälter auf.

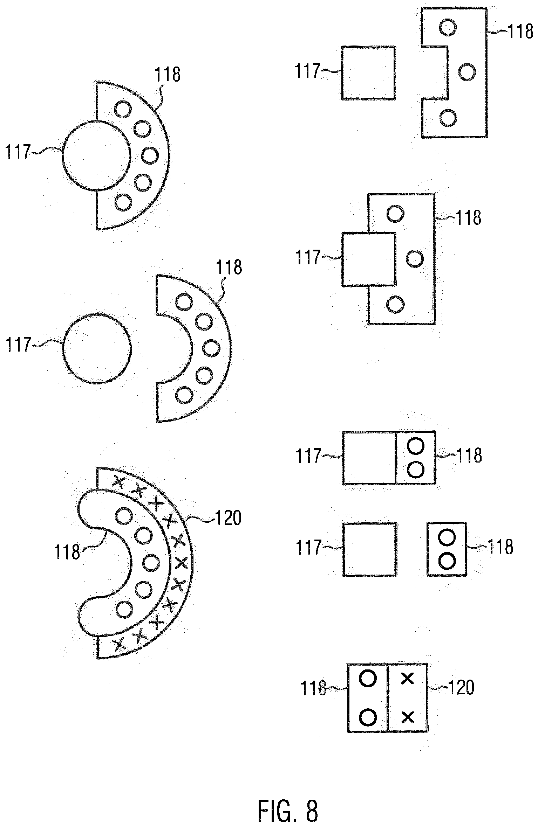

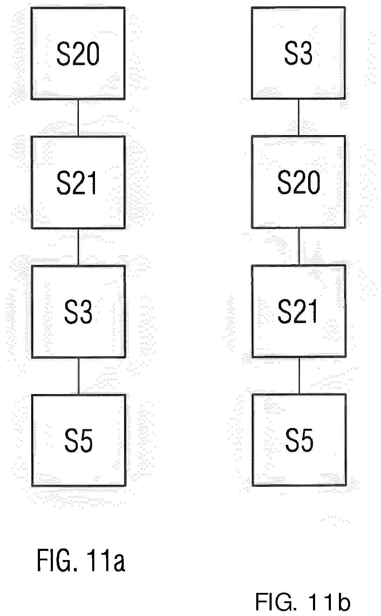

Figur 8 zeigt schematisch eine Einzelheit eines weiteren Ausführungsbeispiels, mit einem zu kühlenden Zubereitungsmittel 117 und einem von einem Kühlmittel durchströmbaren Wärmeaufnahmeelement 118. Insbesondere ist das zu kühlenden Zubereitungselement 117 als Karbonisator ausgebildet. Eine Mantelfläche des zweiten Zubereitungsmittels 118, welcher dem zu kühlenden Zubereitungselement 117 abgewandt ist, kann für verbesserte Kühlleistung eine Isolierschicht 120 aufweisen, welche in der Fig. 8 unten gezeigt sind. Links in Fig. 8 sind ein zu kühlendes Zubereitungselement 117 mit einem im Wesentlichen zylindrischen Querschnitt und ein entsprechend angepasstes Wärmeaufnahmeelement 118 gezeigt. Rechts in Fig. 11 sind ein zu kühlendes Zubereitungselement 117 mit einem im Wesentlichen prismatischen Querschnitt und ein entsprechend angepasstes Wärmeaufnahmeelement 118 gezeigt.

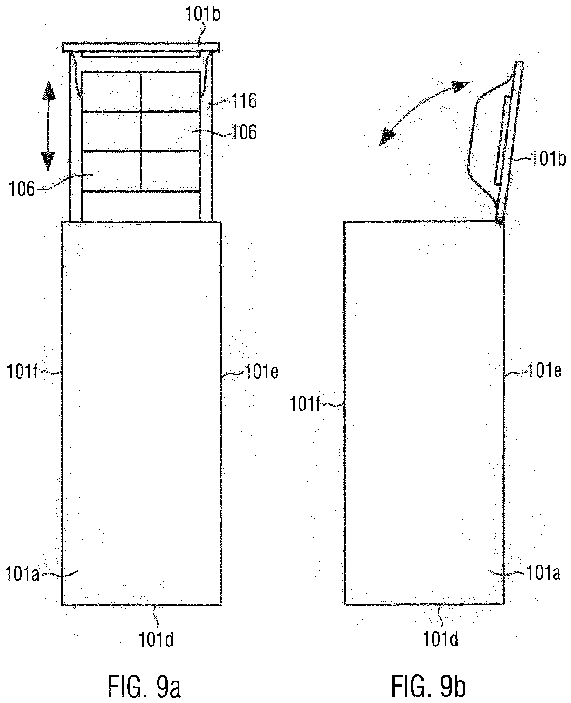

Fig. 9a zeigt schematisch eine Getränkezubereitungsvorrichtung, bei welcher wenigstens eines der Ausgabeelemente und wenigstens eines der Zubereitungselemente an einem Elementträger 119 der Getränkezubereitungsvorrichtung montiert sind. Der Elementträger 119 stützt mehrere benachbart angeordnete Behälteraufnahmen für unabhängige Extraktbehälter ab. Der Elementträger 119 kann mittels Translation abschnittsweise aus dem Gehäuse bewegt werden, worauf Ausgabemittel und Zubereitungsmittel für Reinigung, Wartung oder Austausch zugänglich werden. Das vordere Gehäuseelement 101b ist mechanisch mit dem Elementträger 119 verbunden. Vorzugsweise ist der Elementträger 119 mittels wenigstens einer Schiene geführt, welche mit einem der Gehäuseelemente 101e, 101f mechanisch verbunden.

Fig. 9b zeigt eine andere Weiterbildung, bei welcher das vordere Gehäuseelement 101b gelenkig mit einem seitlichen Gehäuseelement 101e verbunden ist. Nach Schwenken des Gehäuseelement 101b, worauf eine Öffnung zum Innenraum des Gehäuses frei wird, sind Ausgabemittel und Zubereitungsmittel für Reinigung, Wartung oder Austausch durch die Öffnung zugänglich. Vorzugsweise sind wenigstens eines der Ausgabeelemente und wenigstens eines der Zubereitungselemente an einem Elementträger 119 der Getränkezubereitungsvorrichtung montiert. Vorzugsweise ist der Elementträger 119 mittels wenigstens einer Schiene geführt, welche mit einem der Gehäuseelemente 101e, 101f mechanisch verbunden.

Ein Verfahren gemäß dem zweiten Aspekt weist den Schritt So auf: Übermitteln wenigstens einer Behälterinformation, wobei die Behälterinformation repräsentativ für die Kennung eines Extraktbehälters zur Aufnahme des Getränkeextrakts, das Volumen des Extraktbehälters (Behältervolumen) oder die Art des Getränkeextrakts ist, wobei der Extraktbehälter von einem fahrbaren Gehäuse der Getränkezubereitungsvorrichtung auswechselbar aufgenommen ist, durch eine Kommunikations-einrichtung der Getränkezubereitungsvorrichtung, insbesondere an eine übergeordnete Kommunikationseinrichtung.

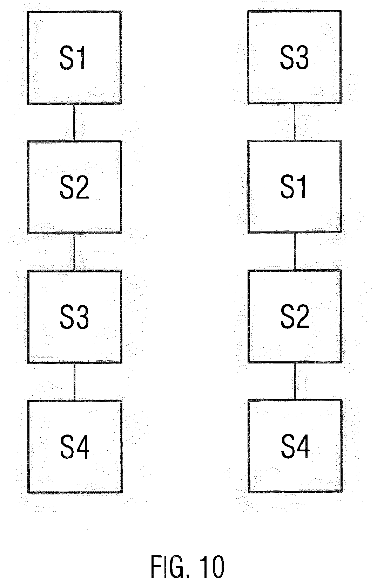

Figur 10 zeigt Flussdiagramme von Weiterbildungen dieses Verfahrens. Diese Weiterbildung des Verfahrens, welche insbesondere für die Getränkezubereitungsvorrichtungen der Figuren 1, 2, 4, 5, 6, 7 und 9 geeignet ist, weist die Schritte auf:
S1 Lesen einer der Behälterinformationen wenigstens eines der Extraktbehälter (erster Extraktbehälter), insbesondere durch die Kommunikationseinrichtung oder durch einen mit der Kommunikationseinrichtung signalverbundenen Sensor, insbesondere Lesen des Behältervolumens des ersten Extraktbehälters,
S2 Bestimmen des Restinhalts M des ersten Extraktbehälters, insbesondere durch eine Steuereinrichtung der Getränkezubereitungsvorrichtung, insbesondere einschließlich Setzen eines extraktgebundenen Flags wenn der Restinhalt M einen vorbestimmten Restinhalt Mg unterschreitet,
S3 Empfangen einer Aufforderung einer übergeordneten Kommunikationseinrichtung, insbesondere durch die Kommunikationseinrichtung, insbesondere einschließlich Übermitteln der Aufforderung an die Steuereinrichtung,
S4 Übermitteln des Restinhalts M wenigstens eines der Extraktbehälter gemeinsam mit wenigstens einer der Behälterinformationen des Extraktbehälters, oder Übermitteln des extraktgebundenen Flags, insbesondere durch die Kommunikationseinrichtung.

Während Schritt S2 erfolgt das Bestimmen des Restinhalts M unter wiederholtem Subtrahieren der zur Zubereitung eines Getränkes erforderlichen bzw. zu entnehmenden Menge M1 von der anfänglich im Extraktbehälter enthaltenen Menge M0 bestimmen, wobei N für die Anzahl der mit diesem Getränkeextrakt zubereiteten Getränke steht: M = M0 - N * M1. Schritt S4 ist eine Konkretisierung des Schritts S0 und ist insbesondere anstelle von Schritt S0 auszuführen.

Entsprechend dem in der Figur 10 links dargestellten Flussdiagramm werden die Schritte vorzugsweise in der Reihenfolge S1, S2, S3, S4 ausgeführt. Alternativ wird die Schritte entsprechend dem in der Figur 10 rechts dargestellten Flussdiagramm in der Reihenfolge S3, S1, S2, S4 durchgeführt.

Figur 11 zeigt Flussdiagramme eines dritten Verfahrens zum Betrieb einer Getränkezubereitungsvorrichtung mit den Schritten:
520 Erfassen eines Zustands der Zubereitungsmittel (Zustandserfassung) durch die Steuereinrichtung, wobei die Zubereitungsmittel zur Mitteilung eines gestörten Zustands (Störung) ausgestaltet sind, insbesondere auf Veranlassung durch die Kommunikationseinrichtung, insbesondere nach Schritt S3,
S21 Erzeugen einer Störungsmeldung, insbesondere welche auf die Art der Störung oder deren Ursache hinweist, wenn durch die Zustandserfassung eine Störung der Zubereitungsmittel erfasst ist, insbesondere durch die Steuereinrichtung,
S3 Empfangen einer Aufforderung einer übergeordneten Kommunikationseinrichtung durch die Kommunikationseinrichtung,
S5 Übermitteln der Störungsmeldung durch die Kommunikationseinrichtung, insbesondere an die übergeordnete Kommunikationseinrichtung oder an eine dritte, insbesondere am Zielort oder bei einem Ersatzteillager befindliche, Kommunikationseinrichtung, insbesondere nach den Schritten S3 und S21.

Daraufhin kann ein Ersatzteil oder Material zur Reparatur des die Störung aufweisenden Zubereitungselements am Zielort des Fahrzeugs bereitgehalten werden kann. Diese Weiterbildung kann den Vorteil bieten, dass der Zeitaufwand zur Wartung bzw. Instandsetzung der Getränkezubereitungsvorrichtung verringert werden kann.

Entsprechend Figur 11a werden die Schritte vorzugsweise in der Reihenfolge S20, S21, S3, S5 ausgeführt. Alternativ werden die Schritte entsprechend Figur 11b in der Reihenfolge S3, S20, S21, S5 durchgeführt.

### Bezugszeichen

- 11: Gehäuse
- 12: Zubereitungsmittel
- 13: Ausgabemittel
- 14: Extraktbehälter
- 15: Kommunikationseinrichtung
- 16: Steuereinrichtung
- 99: übergeordnete Kommunikationseinrichtung
- 101: Gehäuse
- 101b: vorderes Gehäuseelement
- 102: Bedieneinrichtung
- 103: Gefäßaufnahme
- 104: Wasseranschluss
- 105: elektrischer Anschluss
- 106: Getränkeextrakt
- 107: Wasserfilter
- 108: Pumpelement
- 109: CO2-Speicher
- 110: Karbonisator
- 111: Kühlkompressor
- 112: Zapfeinheit
- 114: Wärmetauscher
- 115: Mischeinrichtung
- 116: Gruppe von Mischeinrichtungen, Mischbatterie
- 117: zu kühlendes Zubereitungselement
- 118: durchströmbares Wärmeaufnahmeelement
- 119: Elementträger
- 120: Isolierschicht
- 201: Gehäuse
- 201b: vorderes Gehäuseelement
- 202: Bedieneinrichtung
- 203: Gefäßaufnahme
- 204: Wasseranschluss
- 205: elektrischer Anschluss
- 206: Getränkeextrakt
- 207: Wasserfilter
- 208: Pumpelement
- 209: Steuereinrichtung
- 210: Netzteil
- 211: Wassererhitzer
- 213: Zapfeinheit
- 215: Mischeinrichtung

## Patentansprüche

1. Mobile Getränkezubereitungsvorrichtung (10) ausgebildet zur Zubereitung von, insbesondere heißen und/oder kalten, Getränken mit wenigstens einem Getränkeextrakt (106) und zur Ausgabe der zubereiteten Getränke in einem Fahrzeug, aufweisend
• ein fahrbares Gehäuse (11), das zur auswechselbaren Aufnahme wenigstens eines Extraktbehälters (14) ausgestaltet ist,
wobei der Extraktbehälter zur Aufnahme des Getränkeextrakts ausgestaltet ist und wenigstens eine Behälterinformation aufweist,
wobei die Behälterinformation repräsentativ für eine Kennung des Extraktbehälters, für das Volumen des Extraktbehälters oder für die Art des Getränkeextrakts ist,
• eine Kommunikationseinrichtung (15), die zur Übermittlung wenigstens einer der Behälterinformationen an eine übergeordnete Kommunikationseinrichtung (99) ausgestaltet ist.

2. Getränkezubereitungsvorrichtung (10) gemäß Anspruch 1, wobei die Kommunikationseinrichtung (15) ausgestaltet ist, auf eine Aufforderung der übergeordneten Kommunikationseinrichtung (99), insbesondere des Fahrzeugs, wenigstens eine der Behälterinformationen zu übermitteln.

3. Getränkezubereitungsvorrichtung (10) gemäß einem der vorhergehenden Ansprüche, wobei die Kommunikationseinrichtung (15) zur Funkkommunikation ausgestaltet ist.

4. Getränkezubereitungsvorrichtung (10) gemäß einem der vorhergehenden Ansprüche, wobei die Kommunikationseinrichtung (15) eine GSM-Schaltung aufweist, wobei die GSM-Schaltung auf eine Aufforderung der übergeordneten Kommunikationseinrichtung (99) aktivierbar ist.

5. Getränkezubereitungsvorrichtung (10) gemäß einem der vorhergehenden Ansprüche, wobei die wenigstens eine Behälterinformation mit einem RFID-chip oder mit einem grafischen Code bereitgestellt ist.

6. Getränkezubereitungsvorrichtung (10) gemäß einem der vorhergehenden Ansprüche, mit einer elektronischen Steuereinrichtung (16) insbesondere zur Bestimmung eines Restinhalts M des wenigstens einen Extraktbehälters (14) abhängig von dessen Behältervolumen und abhängig von der Menge des dem Extraktbehälter (14) zur Getränkezubereitung entnommenen Getränkeextrakts.

7. Getränkezubereitungsvorrichtung (10) gemäß Anspruch 6, wobei die Kommunikationseinrichtung (15) ausgestaltet ist, den von der Steuereinrichtung (16) bestimmten Restinhalt M gemeinsam mit wenigstens einer der Behälterinformationen desselben Extraktbehälters (14) zu übermitteln.

8. Getränkezubereitungsvorrichtung (10) gemäß einem der vorhergehenden Ansprüche, aufweisend Zubereitungsmittel (12) zur Getränkezubereitung mit Wasser und mit mindestens einem der Getränkeextrakte, wobei die Zubereitungsmittel (12) vom Gehäuse (11) aufgenommen sind, wobei der wenigstens eine von der Getränkezubereitungsvorrichtung (10) aufgenommene Extraktbehälter (14) mit den Zubereitungsmitteln (12) fluidverbindbar ist.

9. Getränkezubereitungsvorrichtung (10) gemäß Anspruch 8, wobei wenigstens ein Zubereitungselement der Zubereitungsmittel (12) der folgenden Gruppe entnommen ist, welche beinhaltet: ein Pumpelement (108), einen Karbonisator (110), einen CO₂-Speicher (109), eine Temperiereinrichtung (211), eine Mischeinrichtung (115), einen Wasserfilter (107), einen Wassertank, eine Behälteraufnahme.

10. Getränkezubereitungsvorrichtung (10) gemäß einem der Ansprüche 8-9, wobei eines der Zubereitungselemente (117) für die Getränkezubereitung zu kühlen ist, wobei die Gestalt eines von einem Kühlmittel durchströmbaren Wärmeaufnahmeelements (118) der Getränkezubereitungsvorrichtung an die Form des zu kühlenden Zubereitungselements angepasst ist, wobei das Wärmeaufnahmeelement (118) mit dem Gehäuse (11) mechanisch verbunden ist.

11. Getränkezubereitungsvorrichtung (10) gemäß einem der Ansprüche 8-10, wobei für die Zubereitung eines Heißgetränks eines der Zubereitungselemente als Heizeinrichtung (211) ausgebildet ist, wobei die Heizeinrichtung (211) Wasser auf die vom Umgebungsdruck abhängige Siedetemperatur erhitzen kann, und wobei der Getränkeextrakt (106 , 206) als Sirup ausgebildet ist.

12. Getränkezubereitungsvorrichtung (10) gemäß einem der Ansprüche 8-11, aufweisend Ausgabemittel zur Getränkeausgabe, wobei wenigstens ein Ausgabeelement der Ausgabemittel mit den Zubereitungsmitteln fluidverbunden ist.

13. Getränkezubereitungsvorrichtung (10) gemäß Anspruch 12, wobei wenigstens eines der Ausgabeelemente der folgenden Gruppe entnommen ist, welche beinhaltet: eine Gefäßaufnahme (103) für einen unabhängigen Getränkebehälter und eine Zapfeinheit (112).

14. Getränkezubereitungsvorrichtung (10) gemäß Anspruch 13, wobei eines der Ausgabeelemente als Erfassungselement zum Erfassen wenigstens einer Dimension eines in die Gefäßaufnahme (103) eingesetzten unabhängigen Getränkebehälters ausgestaltet ist, wobei die von den Zubereitungsmitteln zubereitete Menge des Getränks abhängig von der erfassten Dimension ist.

15. Getränkezubereitungsvorrichtung (10) gemäß einem der Ansprüche 6-14, wobei die Kommunikationseinrichtung ausgestaltet ist, eine von der Steuereinrichtung (16) empfangene Störungsmeldung insbesondere betreffend die Ausgabemittel oder die Zubereitungsmittel zu übermitteln.

16. Getränkezubereitungsvorrichtung (10) gemäß einem der Ansprüche 8-15, wobei wenigstens eines der Ausgabeelemente und/oder wenigstens eines der Zubereitungselemente mit einem Elementträger (119) der Getränkezubereitungsvorrichtung (10) mechanisch verbunden ist, wobei der Elementträger translatorisch und wenigstens abschnittsweise aus dem Gehäuse (11) in dessen Umgebung verlagerbar ist, insbesondere zum Austausch eines der Ausgabeelemente, eines der Zubereitungselemente oder eines der Extraktbehälter, wobei vorzugsweise das zu kühlende Zubereitungselement mit dem Elementträger (119) mechanisch verbunden ist.

17. Anordnung mit einer Getränkezubereitungsvorrichtung (10) gemäß einem der vorhergehenden Ansprüche und wenigstens einem Extraktbehälter (14), welcher von dem fahrbaren Gehäuse (11) auswechselbar aufgenommen ist.

18. Fahrzeug, insbesondere Luftfahrzeug, Wasserfahrzeug, Schienenfahrzeug oder Straßenfahrzeug, mit einer Getränkezubereitungsvorrichtung (10) gemäß einem der Ansprüche 1 - 16 oder einer Anordnung gemäß Anspruch 17.

19. Verfahren zum Betrieb einer Getränkezubereitungsvorrichtung (10) gemäß einem der Ansprüche 1 - 16, mit dem Schritt:
S0 Übermitteln wenigstens einer Behälterinformation, wobei die Behälterinformation repräsentativ für die Kennung eines Extraktbehälters (14) zur Aufnahme des Getränkeextrakts, das Volumen des Extraktbehälters (14) oder die Art des Getränkeextrakts ist, wobei der Extraktbehälter (14) von einem fahrbaren Gehäuse (11) der Getränkezubereitungsvorrichtung (10) auswechselbar aufgenommen ist, durch eine Kommunikationseinrichtung (15) der Getränkezubereitungsvorrichtung (10), insbesondere an eine übergeordnete Kommunikationseinrichtung (99).

20. Verfahren gemäß Anspruch 19, mit den Schritten:
S1 Lesen einer Behälterinformationen wenigstens eines der Extraktbehälter (14), insbesondere Lesen des Behältervolumens oder der anfänglich im Extraktbehälter (14) enthaltenen Menge des Getränkeextrakts M₀,
S2 Bestimmen eines Restinhalts M des wenigstens einen Extraktbehälters (14), insbesondere durch die Steuereinrichtung (16),
S3 Empfangen einer Aufforderung einer übergeordneten Kommunikationseinrichtung (99) durch die Kommunikationseinrichtung (15),
S4 Übermitteln des Restinhalts M gemeinsam mit wenigstens einer der Behälterinformationen desselben Extraktbehälters (14) durch die Kommunikationseinrichtung (15).

21. Verfahren gemäß einem der Ansprüche 19-20, wobei Schritt S3 einschließt:
Vergleichen des Restinhalts M mit einem vorbestimmten Restinhalt M_{g} durch die Steuereinrichtung (15), und/oder
Setzen eines extraktgebundenen Flags durch die Steuereinrichtung (15), wenn der Restinhalt M den vorbestimmten Restinhalt Mg unterschreitet.

22. Verfahren gemäß einem der Ansprüche 19-21, mit wenigstens einem der Schritte:
S5 Übermitteln einer Störungsmeldung durch die Kommunikationseinrichtung (15), insbesondere nach Schritt S3, und/oder
S6 Wechseln wenigstens eines der Extraktbehälter (14) aufgrund von Schritt S4, und/oder
S7 Wechseln oder Warten eines der Ausgabeelemente oder eines der Zubereitungselemente aufgrund von Schritt S5.

23. Verfahren gemäß einem der Ansprüche 19-22, mit den Schritten:
S20 Erfassen eines Zustands der Zubereitungsmittel durch die Steuereinrichtung (15), wobei die Zubereitungsmittel zur Mitteilung eines gestörten Zustands ausgestaltet sind, insbesondere auf Veranlassung durch die Kommunikationseinrichtung (15), insbesondere nach Schritt S3,
S21 Erzeugen einer Störungsmeldung, wenn durch das Erfassen des Zustands eine Störung der Zubereitungsmittel erfasst ist, insbesondere durch die Steuereinrichtung (16),
S3 Empfangen einer Aufforderung einer übergeordneten Kommunikationseinrichtung (99) durch die Kommunikationseinrichtung (15),
S5 Übermitteln der Störungsmeldung durch die Kommunikationseinrichtung (15), insbesondere nach den Schritten S3 und S21.

## Claims

1. Mobile beverage-preparation device (10) configured to prepare beverages, in partcular hot and/or cold beverages, with at least one beverage extract (106) and to output the prepared beverage in a vehicle, including
- a drivable housing (11) that is configured to exchangeably accommodate at least one extract tank (14),
wherein the extract tank is configured to accommodate the beverage extract and includes at least one tank information,
wherein the tank information is representative for a recognition of the extract tank, the volume of the extract tank or the type of the beverage extract tank,
- a communication unit (15) that is configured to transmit at least one of the tank information to a superordinate communication unit (99).

2. Beverage-preparation device (10) according to claim 1, wherein the communication unit (15) is configured to transmit at least one of the tank information in response to a demand of the superordinate communication unit (99), in particular of the vehicle.

3. Beverage-preparation device (10) according to one of the preceding claims, wherein the communication unit (15) is configured for wireless communication.

4. Beverage-preparation device (10) according to one of the preceding claims, wherein the communication unit (15) comprises a GSM-circuit, wherein the GSM-circuit is configured to be activated in response to a demand of the superordinate communication unit (99).

5. Beverage-preparation device (10) according to one of the preceding claims, wherein the at least one tank information is provided with a RFID-chip or a graphic code.

6. Beverage-preparation device (10) according to one of the preceding claims, with an electronic control unit (16) in particular for determining a residual content M of the at least one extract tank (14) dependent on its tank volume and dependent on the amount of the beverage extract taken out from the extract tank (14) for preparing the beverage.

7. Beverage-preparation device (10) according to Claim 6, wherein the communication unit (15) is configured to transmit the residual content M determined by the control unit (16) together with at least one of the tank information of the same extract tank (14).

8. Beverage-preparation device (10) according to one of the preceding claims, including a preparation means (12) for beverage preparation with water and with at least one of the beverage extracts, wherein the preparation means (12) are accommodated by the housing (11), wherein the at least one extract tank (14) accommodated by the beverage-preparation device (10) is fluid-connectable to the preparation means (12).

9. Beverage-preparation device (10) according to Claim 8, wherein at least one preparation element of the preparation means (12) is selected from the following group which includes: a pump element (108), a carbonator (110), a CO2-storage (109), a tempering device (211), a mixing device (115), a water filter (107), a water tank, a tank housing.

10. Beverage-preparation device (10) according to one of the Claims 8-9 wherein one of the preparation elements (117) for the beverage preparation is to be cooled, wherein the design of a heat absorption element (118), being configured such that a cooling means can flow through, of the beverage-preparation device is adapted to the shape of the preparation element to be cooled, wherein the heat absorption element (118) is mechanically connected to the housing (11).

11. Beverage-preparation device (10) according to one of the Claims 8-10, wherein one of the preparation elements is configured as a heat device (211) for the preparation of a hot beverage, wherein the heat device (211) is able to heat water to a boiling temperature which depends on ambient pressure, and wherein the beverage extract (106, 206) is configured as syrup.

12. Beverage-preparation device (10) according to one of Claims 8-11, including an outputting means for beverage output, wherein at least one outputting element of the outputting means is fluid-connected to the preparation means.

13. Beverage-preparation device (10) according to Claim 12, wherein at least one of the outputting elements is selected from the following group which includes: a tank housing (103) for an independent beverage tank and a tapping unit (112).

14. Beverage-preparation device (10) according to Claim 13, wherein one of the outputting elements is configured as a recording element for recording at least a dimension of an independent beverage tank input in the beverage housing (103), wherein the amount of the beverage prepared by the preparation means depends on the recorded dimension.

15. A beverage-preparation device according to one of the Claims 6-14, wherein the communication unit is configured to transmit an error message, in particular regarding the outputting means or the preparation means, received by the control unit (16).

16. Beverage-preparation device (10) according to one of the Claims 8-15 wherein at least one of the outputting elements and/or at least one of the preparation elements is mechanically connected to an element carrier (119) of the beverage-preparation device (10), wherein the element carrier is translatory and at least at some portions movable out of the housing (11) in its surrounding, in paticular for exchanging one of the outputting elements, one of the preparation elements or one of the extract tanks, wherein preferably the preparation elements to be cooled is mechanically connected to the element carrier (119).

17. Arrangement with a beverage-preparation device (10) according to one of the preceding claims and at least one extract tank (14) which is exchangeably accommodated by the drivable housing (11).

18. Vehicle, in particular an air plane, a water vehicle, a rail vehicle or a road vehicle, with a beverage-preparation device (10) according to one of the Claims 1-16 or an arrangement according to Claim 17.

19. A method for operating a beverage-preparation device (10) according to one of the Claims 1-16, with the step of:
S0 transmitting at least one tank information, wherein the tank information is representative for the recognition of an extract tank (14) for accommodating the extract tank, the volume of the extract tank (14) or the kind of the extract tank,
wherein the extract tank (14) is exchangeably accommodated by a driveable housing (11) of the beverage-preparation device (10), by a communication unit (15) of the beverage-preparation device (10), in particular to a superordinate communication unit (99).

20. Method according to Claim 19, with the steps of
S1 reading a tank information of at least one of the extract tanks (14), in particular reading the tank volume or the amount of the beverage extract M₀ initially included in extract tank (14),
S2 determining a residual amount M of the at least one extract tank (14), especially by the control unit (16),
S3 receiving a demand of a superordinate communication unit (99) by the communication unit (15),
S4 transmitting the residual amount M together with at least one of the tank information of the same extract tank (14) by the communication unit (15).

21. Method according to one of the Claims 19-20, wherein step S3 includes:
comparing the residual amount M with a predetermined residual amount M_{g} by the control unit (15), and/or
setting an extract-related flag by the control unit (15), when the residual amount M is below the predetermined residual amount Mg.

22. Method according to one of the Claims 19-21, with at least one of the steps:
S5 transmitting an error message by the communication unit (15), in particular following step S3, and/or
S6 changing at least one of the extract tanks (14) due to step S4, and/or
S7 changing or maintaining one of the outputting elements or one of the preparation elements due to step S5.

23. Method according to one of Claims 19-22, with the steps of:
S20 capturing a state of the preparation means by the control unit (15), wherein the preparation means is configured to report an error state, in particular in response to demand of the communication unit (15), in particular after step S3,
S21 generating an error message, when an error of the preparation means is recorded by recording the state, in particular by the control unit (16),
S3 receiving a demand of a superordinate communication unit (99) by the communication unit (15),
S5 transmitting the error message by the communication unit (15), in particular following the steps S3 and S21.

## Revendications

1. Dispositif de préparation de boisson (10) mobile conçu pour préparer des boissons, notamment chaudes et/ou froides, avec au moins un extrait de boisson (106) et pour distribuer les boissons préparées dans un véhicule, le dispositif comprenant
• un boîtier mobile (11) adapté pour recevoir au moins un récipient d'extrait (14),
le récipient d'extrait étant adapté pour recevoir l'extrait de boisson et comportant au moins une information de récipient,
les informations de récipient étant représentatives d'un identifiant du récipient d'extrait, du volume de récipient d'extrait ou du type d'extrait de boisson,
• un moyen de communication (15) destiné à transmettre au moins une des informations de récipient à un moyen de communication de niveau supérieur (99).

2. Dispositif de préparation de boisson (10) selon la revendication 1, le dispositif de communication (15) étant adapté, à la demande du moyen de communication de niveau supérieur (99), en particulier du véhicule, pour transmettre au moins une des informations de récipient.

3. Dispositif de préparation de boisson (10) selon l'une des revendications précédentes, le moyen de communication (15) étant adapté à la communication radioélectrique.

4. Dispositif de préparation de boisson (10) selon l'une des revendications précédentes le moyen de communication (15) comprenant un circuit GSM, le circuit GSM pouvant être activé à la demande du moyen de communication de niveau supérieur (99).

5. Dispositif de préparation de boisson (10) selon l'une des revendications précédentes, l'au moins une information de récipient étant produite avec une puce RFID ou avec un code graphique.

6. Dispositif de préparation de boisson (10) selon l'une des revendications précédentes, comprenant un moyen de commande électronique (16) destiné notamment à déterminer le contenu résiduel M de l'au moins un récipient d'extrait (14) en fonction du volume de récipient et en fonction de la quantité d'extrait de récipient (14) du récipient d'extrait pour préparer la boisson.

7. Dispositif de préparation de boisson (10) selon la revendication 6, le moyen de communication (15) étant adapté pour transmettre le contenu résiduel M, déterminé par le moyen de commande (16), conjointement avec au moins une des informations de récipient du même récipient d'extrait (14).

8. Dispositif de préparation de boisson (10) selon l'une des revendications précédentes, comprenant des moyens de préparation (12) destinés à préparer des boissons avec de l'eau et au moins un des extraits de boisson, les moyens de préparation (12) étant reçus par le boîtier (11), l'au moins un récipient d'extrait (14), reçu par le dispositif de préparation de boisson (10), pouvant être relié fluidiquement aux moyens de préparation (12).

9. Dispositif de préparation de boisson (10) selon la revendication 8, au moins un élément de préparation des moyens de préparation (12) provenant du groupe suivant qui comprend: un élément de pompage (108), un carbonateur (110), un réservoir de CO₂ (109), un moyen régulateur de température (211), un moyen mélangeur (115), un filtre à eau (107), un réservoir d'eau, un logement de récipient.

10. Dispositif de préparation de boisson (10) selon l'une des revendications 8 à 9, l'un des éléments de préparation (117) destiné à la préparation de boisson devant être refroidi, la forme d'un élément d'absorption de chaleur (118), pouvant être traversé par un agent de refroidissement, du dispositif de préparation de boisson étant adaptée à la forme de l'élément de préparation à refroidir, l'élément d'absorption de chaleur (118) étant relié mécaniquement au boîtier (11).

11. Dispositif de préparation de boisson (10) selon l'une des revendications 8 à 10, l'un des éléments de préparation étant conçu comme un moyen de chauffage (211) pour la préparation d'une boisson chaude, le moyen de chauffage (211) pouvant chauffer l'eau à la température d'ébullition dépendant de la pression ambiante, et l'extrait de boisson (106, 206) se présentant sous la forme d'un sirop.

12. Dispositif de préparation de boisson (10) selon l'une des revendications 8 à 11, comportant des moyens de distribution destinés à distribuer des boissons, au moins un élément de distribution des moyens de distribution étant relié fluidiquement aux moyens de préparation.

13. Dispositif de préparation de boisson (10) selon la revendication 12, au moins l'un des éléments de distribution provenant du groupe suivant qui comprend: un logement de récipient (103) destiné à un récipient de boisson indépendant et une unité formant robinet (112).

14. Dispositif de préparation de boisson (10) selon la revendication 13, l'un des éléments de distribution étant conçu comme un élément de détection destiné à détecter au moins une dimension d'un récipient de boisson indépendant inséré dans le logement de récipient (103), la quantité de boisson préparée par les moyens de préparation dépendant de la dimension détectée.

15. Dispositif de préparation de boisson (10) selon l'une des revendications 6 à 14, le moyen de communication étant adapté pour transmettre un message de panne, reçu par le moyen de commande (16), concernant notamment les moyens de distribution ou les moyens de préparation.

16. Dispositif de préparation de boisson (10) selon l'une des revendications 8 à 15, au moins un des éléments de distribution et/ou au moins un des éléments de préparation étant relié mécaniquement à un support d'élément (119) du dispositif de préparation de boisson (10), l'élément de support pouvant être déplacé en translation et au moins partiellement depuis le boîtier (11) jusque dans l'environnement de celui-ci, notamment pour échanger l'un des éléments de distribution, l'un des éléments de préparation ou l'un des récipients d'extrait , l'élément de préparation à refroidir étant relié mécaniquement au support d'élément (119).

17. Ensemble comprenant un dispositif de préparation de boisson (10) selon l'uns des revendications précédentes et au moins un récipient d'extrait (14) qui est reçu de manière remplaçable par le boîtier mobile (11).

18. Véhicule, notamment véhicule aérien, véhicule nautique, véhicule ferroviaire ou véhicule routier comportant un dispositif de préparation de boisson (10) selon l'une des revendications 1 à 16 ou un ensemble selon la revendication 17.

19. Procédé de fonctionnement d'un dispositif de préparation de boisson (10) selon l'une des revendications 1 à 16, comprenant l'étape :
S0 de transmission d'au moins une information de récipient, l'information de récipient étant représentative de l'identifiant d'un récipient d'extrait (14) destiné à recevoir l'extrait de boisson, du volume du récipient d'extrait (14) ou du type d'extrait de boisson, le récipient d'extrait (14) pouvant être reçu de manière remplaçable par un boîtier mobile (11) du dispositif de préparation de boisson (10), par un moyen de communication (15) du dispositif de préparation de boisson (10), en particulier à un dispositif de communication de niveau supérieur (99).

20. Procédé selon la revendication 19, comprenant les étapes :
S1 de lecture d'informations de récipient d'au moins un des récipients d'extrait (14), en particulier de lecture du volume de récipient ou de la quantité d'extrait de boisson Mo contenue initialement dans le récipient d'extrait (14),
S2 de détermination d'un contenu résiduel M de l'au moins un récipient d'extrait (14), en particulier par le moyen de commande (16),
S3 de réception d'une demande d'un moyen de communication de niveau supérieur (99) par le moyen de communication (15),
S4 de communication du contenu résiduel M conjointement avec l'au moins une des informations de récipient du même récipient d'extrait (14) par le moyen de communication (15).

21. Procédé selon l'une des revendications 19 à 20, l'étape S3 comprenant :
la comparaison du contenu résiduel M avec un contenu résiduel prédéterminé M_{g} par le moyen de commande (15) et/ou
le placement d'un indicateur, lié à l'extrait, par le moyen de commande (15) lorsque le contenu résiduel M devient inférieur au contenu résiduel prédéterminé M_{g}.

22. Procédé selon l'une des revendications 19 à 21, comprenant au moins une des étapes :
S5 de transmission d'un message de panne par le moyen de communication (15), en particulier après l'étape S3, et/ou
S6 d'échange d'au moins un des récipients d'extrait (14) sur la base de l'étape S4, et/ou
S7 d'échange ou d'entretien de l'un des éléments de distribution ou de l'un des éléments de préparation sur la base de l'étape S5.

23. Procédé selon l'une des revendications 19 à 22, comprenant les étapes :
S20 de détection d'un état des moyens de préparation par le moyen de commande (15), les moyens de préparation étant adaptés pour notifier un état en panne, en particulier à l'initiative du moyen de communication (15), en particulier après l'étape S3,
S21 de génération d'un message de panne lorsque la détection de l'état entraîne la détection d'une panne des moyens de préparation, notamment par le moyen de commande (16),
S3 la réception d'une demande d'un moyen de communication d'ordre supérieur (99) par le moyen de communication (15),
S5 la transmission du message de panne par le moyen de communication (15), en particulier après les étapes S3 et S21.
